# FASCICULE DE BREVET EUROPEEN

(11) **EP 0 898 662 B1**
(45) Date de publication et mention de la délivrance du brevet: **27.03.2002**
(21) Numéro de dépôt: 97919117.8
(22) Date de dépôt: 17.09.1997
(51) Int. Cl.: F16D 13/75

(54) **EMBRAYAGE A FRICTION A DISPOSITIF DE RATTRAPAGE D'USURE, NOTAMMENT POUR VEHICULE AUTOMOBILE**
REIBUNGSKUPPLUNG FÜR KRAFTFAHRZEUGE MIT EINER VERSCHLEISS-NACHSTELLEINRICHTUNG
FRICTION CLUTCH WITH WEAR ADJUSTING DEVICE, IN PARTICULAR FOR MOTOR VEHICLES

(30) Priorité: 17.09.1996 FR 9611297; 23.12.1996 FR 9615865
(43) Date de publication de la demande: 03.03.1999
(73) Titulaire: VALEO, 75017 Paris (FR)
(72) Inventeur: THIRION DE BRIEL, Jacques, F-92700 Colombes (FR); BLARD, Michel, F-92130 Issy-les-Moulineaux (FR)
(74) Mandataire: Gamonal, Didier
(86) Numéro de dépôt international: FR9701643
(87) Numéro de publication internationale: WO9812444

(56) Documents cités:
- FR-A- 2 424 442
- FR-A- 2 739 159
- GB-A- 2 286 022
- US-A- 4 194 610
- US-A- 5 090 536
- US-A- 5 251 737

## Description

La présente invention concerne un embrayage à friction, notamment pour véhicule automobile, et se rapporte plus particulièrement à un embrayage équipé d'un dispositif de compensation de l'usure due notamment à l'usure des garnitures de friction, ledit dispositif, dit ci-après dispositif de rattrapage d'usure, opérant au fur et à mesure de l'usure desdites garnitures.

Un embrayage à friction classique comporte généralement un plateau de réaction, éventuellement en deux parties pour formation d'un volant amortisseur, calé en rotation sur un premier arbre, usuellement un arbre menant tel que le vilebrequin du moteur à combustion interne, et supportant par sa périphérie externe un couvercle auquel est rattaché au moins un plateau de pression.

Le plateau de pression est solidaire en rotation du couvercle et du plateau de réaction tout en pouvant se déplacer axialement sous la sollicitation de moyens élastiques à action axiale commandés, généralement un diaphragme métallique prenant appui sur le couvercle, tandis qu'un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement. Le diaphragme commande le déplacement axial du plateau de pression lorsqu'il est actionné par une butée de débrayage. Plus précisément la partie périphérique du diaphragme forme les moyens élastiques précités ou moyens embrayeurs commandés par des moyens débrayeurs, ici les doigts du diaphragme. Les moyens débrayeurs permettent, lorsqu'ils sont actionnés par la butée de débrayage, de contrecarrer l'action des moyens débrayeurs.

Au cours de la durée de vie d'un tel embrayage, les garnitures de friction ainsi que les contre-matériaux, plateau de pression et plateau de réaction, s'usent, ce qui provoque une variation de la position du plateau de pression et celles des moyens élastiques à action axiale et de la butée de débrayage, d'où il s'ensuit une variation de la force de serrage entre le disque de friction, d'une part, et les plateaux de pression et de réaction, d'autre part, en raison des modifications des conditions de travail du diaphragme, et la force nécessaire pour débrayer s'en trouve affectée. En dotant un tel embrayage d'un dispositif de rattrapage d'usure, on évite ces inconvénients, le diaphragme, ainsi que la butée de débrayage, usuellement en appui constant sur le diaphragme, occupant la même position lorsque l'embrayage est en position d'engagement.

On a déjà proposé, selon le document US-A-5 090 536, de réaliser un dispositif de rattrapage en disposant entre le diaphragme et le plateau de pression deux bagues annulaires portant des rampes complémentaires, une première bague annulaire étant fixe en rotation par rapport au plateau de pression, la seconde étant déplaçable en rotation, par rapport à celui-ci et à la première, le déplacement relatif circonférentiel des deux bagues conduisant, du fait des rampes complémentaires qu'elles portent, à un écartement des bagues dans le sens axial compensant ladite usure, cet écartement simulant une augmentation de l'épaisseur axiale du plateau de pression ; pour son déplacement relatif en rotation, la seconde bague est munie à sa périphérie d'un secteur denté dont les dents engrènent avec une vis sans fin disposée de manière tangentielle et montée à rotation sur un axe porté par le couvercle de l'embrayage ; la vis sans fin est susceptible d'être entraînée en rotation, par l'intermédiaire d'un accouplement unidirectionnel, par un tambour porté par le même axe qui porte la vis sans fin, lequel tambour est, en cas d'usure des garnitures du disque de friction, entraîné lui-même en rotation ; l'accouplement unidirectionnel est disposé en sorte que la vis sans fin est entraînée par le tambour, qui constitue en quelque sorte une pièce d'armement du dispositif, lorsque celui-ci est lui-même entraîné en rotation lors du débrayage, la rotation de la vis sans fin conduisant à une rotation de la seconde bague, comme cela a été dit ci-dessus.

Un accouplement unidirectionnel disposé entre la vis sans fin et l'axe qui la supporte permet à celle-ci de conserver sa position en rotation après chaque réglage.

Un tel dispositif, selon le document US-A-5 090 536, présente les inconvénients suivants : la pièce d'armement, qui est portée par le couvercle de l'embrayage, est susceptible d'être entraînée en rotation par un levier lui-même commandé par la butée de débrayage ; dès lors, la butée de débrayage doit être spécifiquement adaptée à la commande dudit levier et est encombrante axialement ; par ailleurs, lorsque la butée de débrayage est amenée à être déplacée axialement au delà de la course juste nécessaire pour l'opération de débrayage, l'opération de rattrapage est effectuée alors qu'il n'y a pas eu usure, ce qui est dangereux car pouvant conduire à un blocage de l'embrayage qui finit par ne plus pouvoir être débrayé.

Il est connu du document FR-A-2 424 442, conforme au préambule de la revendication 1, un embrayage à friction, comportant un plateau de réaction destiné à être calé en rotation sur un arbre menant, un disque de friction, portant à sa périphérie externe des garnitures de friction, destiné à être calé en rotation sur un arbre mené, un plateau de pression, un couvercle fixé sur le plateau de réaction, des moyens-élastiques à action axiale agissant entre, d'une part, le couvercle et, d'autre part, le plateau de pression par l'intermédiaire de moyens d'appui, le plateau de pression étant solidaire en rotation du couvercle tout en pouvant se déplacer axialement par rapport à lui et étant soumis à l'action de moyens élastiques de rappel rappelant le plateau de pression axialement vers le couvercle, ledit embrayage comportant également un dispositif de rattrapage d'usure comprenant des moyens à rampes disposées circonférentiellement, placés axialement entre les moyens d'appui et le plateau de pression et adaptés à être entraînés en rotation grâce à une denture qu'ils portent à leur périphérie et avec laquelle coopère une vis sans fin disposée tangentiellement, des moyens d'entraînement en rotation de la vis sans fin étant prévus, rendus opérationnels par l'usure des garnitures de friction lorsque l'embrayage est embrayé, ainsi que des moyens anti-retour empêchant la vis sans fin de tourner dans le sens contraire de celui dans lequel elle est entraînée en rotation par les moyens d'entraînement en rotation lorsqu'ils sont opérationnels, la vis sans fin, les moyens anti-retour et les moyens d'entraînement en rotation de la vis sans fin étant portés par un support solidaire du couvercle, et les moyens élastiques à action axiale étant constitués par un diaphragme, qui commande la rotation de la vis sans fin par l'intermédiaire d'une pièce de commande appartenant aux dits moyens d'entraînement en rotation de la vis sans fin.

La présente invention a pour but de pallier ces inconvénients.

Ce but est atteint grâce au fait que la course de la pièce de commande lors de l'opération de débrayage est limitée par une butée dite de contrôle.

Le fait que la vis sans fin, les moyens anti-retour et les moyens d'entraînement en rotation de la vis sans fin sont portés par le couvercle améliore la précision de la détection de l'usure.

Avantageusement, les moyens d'entraînement en rotation, de la vis sans fin, sont commandés par le diaphragme par l'intermédiaire d'une languette ou doigt de commande, formant pièce de commande, dont la course, lors de l'opération de débrayage, est limitée par une butée dite de contrôle.

Avantageusement, les moyens à rampes sont constitués d'un anneau présentant des rampes inclinées et réparties circonférentiellement ; de préférence, le plateau de pression présente des plots ou des rampes destinés à coopérer avec les rampes des moyens à rampes.

Avantageusement, ledit anneau présente également des zones d'appui constituées par l'arête supérieure arrondie d'emboutis disposés en arcs de cercle centrés sur l'axe de l'embrayage et placés radialement à l'extérieur par rapport aux rampes ; grâce à cette disposition, d'une part, les zones d'appui sont de grande longueur et, d'autre part, les rampes peuvent être nombreuses ainsi, les pressions de contact sont minimisées.

De préférence, les moyens à rampes présentent un rebord axial muni d'ouvertures de ventilation ; avantageusement, les moyens à rampes présentent un rebord axial centrant les moyens à rampes par rapport au plateau de pression.

Avantageusement, la vis sans fin est montée à coulissement selon son axe en étant soumise à l'action d'un moyen élastique dit de rattrapage et, lorsqu'elle est déplacée selon son axe, elle entraîne en rotation circonférentielle lesdits moyens à rampes ; de préférence, la charge du moyen élastique de rattrapage croît avec l'usure des garnitures de friction et ledit déplacement axial est obtenu par action du moyen élastique de rattrapage lorsque sa charge est suffisamment élevée pour surmonter l'effort de frottement dû à l'effort axial provenant des moyens élastiques de rappel auxquels sont soumis lesdits moyens à rampes, l'embrayage étant débrayé ; en variante, la course du plateau de pression est limitée dans le sens du débrayage pour libérer les moyens à rampes de l'effort axial provenant des moyens élastiques de rappel.

Avantageusement, le moyen élastique de rattrapage est un ressort hélicoïdal entourant un axe qui porte la vis sans fin ; les moyens d'entraînement en rotation de la vis sans fin sont constitués par une roue à rochet solidaire de la vis sans fin.

De préférence, l'axe portant la vis sans fin et le ressort hélicoïdal est supporté par le support.

Avantageusement, les moyens anti-retour sont constitués par un cliquet qui coopère avec la roue à rochet.

L'embrayage peut être du type poussé, le diaphragme étant solidarisé au couvercle par des colonnettes ; il peut également être du type tiré.

Le support est en forme de U ayant une âme et deux ailes destinées à supporter l'axe ; les ailes du support se prolongent selon des bras en forme de L s'étendant l'un vers l'autre perpendiculairement à l'âme et se terminant chacun par une extrémité en forme de C sertie sur le bord d'une ouverture transversale du couvercle ; cette ouverture est prévue dans une excroissance radiale définissant un logement pour le dispositif de rattrapage de jeu.

Le support est adapté à recevoir un organe élastique, en forme générale de crosse dont chaque extrémité est munie d'un retour vers l'intérieur ; la partie de plus grande longueur de la crosse croit en largeur vers son extrémité se terminant selon un retour qui porte en bout une languette de commande ; la partie de plus petite longueur de la crosse a son retour formant cliquet anti-retour qui s'étend globalement parallèlement à la languette de commande en étant à distance de celle-ci en sorte que, lorsque l'organe élastique et la roue à rochet sont montés dans le support, le cliquet anti-retour et la languette de commande coopèrent chacun avec un pied de dent ; pour son montage dans le support, l'organe élastique porte latéralement des bras en équerre disposés de part et d'autre de la partie élastique en forme de crosse, orthogonalement par rapport à celle-ci, et l'extrémité libre des bras en équerre porte des trous pour l'axe.

Avantageusement, la vis sans fin et la roue à rochet sont taillées dans une même pièce de réalisation simple et économique.

Le support équipé de la vis sans fin, de la roue à rochet, de l'organe élastique, du ressort et de l'axe constitue un sous-ensemble prêt à être installé dans le couvercle.

Le diaphragme porte à sa périphérie un appendice radial dit actionneur s'étendant radialement à l'extérieur de la partie rondelle Belleville du diaphragme pour coopérer avec la zone élargie de la partie de grande longueur de l'organe élastique.

Les dents de la roue à rochet sont réalisées en sorte que, lors de la course de débrayage garnitures de friction neuves, l'extrémité de la languette de commande ne saute pas une dent, avantageusement le cliquet anti-retour maintenant la roue à rochet.

Les dents de la roue à rochet sont réalisées en sorte que, lors d'une course de débrayage minimum définie par construction, et abstraction faite de la butée de contrôle, l'extrémité de la languette de commande saute une dent.

La partie de grande longueur de la crosse de l'organe élastique vient en butée contre les bras du support.

Si l'usure a été suffisante pour que la roue à rochet ait suffisamment tourné de sorte qu'au retour la languette de commande a sauté une dent, la languette de commande, poussée par l'actionneur, fait tourner, lors de l'opération d'embrayage, la roue à rochet et les moyens à rampes.

De préférence, le support est en forme de U, ayant une âme et deux ailes, chacune portant un trou adapté à recevoir l'axe du dispositif, l'âme portant latéralement une patte à l'équerre dirigée vers l'extérieur destinée à être fixée sur le rebord externe du couvercle ; les ailes du support présentent, du côté opposé à celui où est située la patte, un prolongement axial dont l'extrémité est pliée vers l'extérieur pour constituer une patte de fixation parallèle à la patte ci-dessus et destinée à être fixée au fond du couvercle ; sur leur tranche dirigée vers l'âme, lesdits prolongements sont munis de retours dirigés l'un vers l'autre en s'étendant globalement parallèlement à l'âme et destinés à constituer des butées ; les extrémités se faisant face desdits retours sont à une distance suffisante l'une de l'autre pour permettre, sans le gêner, le débattement de l'actionneur lors des opérations d'embrayage et de débrayage.

L'organe élastique est en forme de cavalier et comprend un corps plan allongé portant à chacune de ses extrémités un bras muni d'un trou adapté à recevoir l'axe ; sur l'un de ses bords longitudinaux, le corps se prolonge selon une extension en oblique du même côté que celui où sont placés les bras ; des échancrures ménagées dans le corps limitent l'extension par rapport aux extrémités du corps portant les bras ; l'extrémité libre de l'extension est munie d'un retour qui se prolonge selon une languette de commande s'étendant en direction du corps en étant globalement parallèle à celui-ci ; une découpe est ménagée dans l'extension ; à la faveur de cette découpe, et d'échancrures dans le corps, est réalisé un cliquet anti-retour composé d'au moins deux lames de longueurs légèrement différentes.

En variante, l'organe élastique comprend deux pièces distinctes ; une première pièce, pour la fonction anti-retour, est un étrier en forme de U dont les deux ailes portent des trous pour supporter l'axe ; l'âme de cet étrier est, sur l'un de ses côtés, au voisinage de sa partie médiane, découpée en au moins deux lames qui s'étendent dans une direction parallèle à celle des ailes et se prolongent selon des retours en équerre dirigés du même côté que les ailes par rapport à l'âme globalement perpendiculairement à ladite âme ; lesdits retours ont des longueurs légèrement différentes et les lames constituent un cliquet anti-retour destiné à coopérer avec la roue à rochet.

Avantageusement, la seconde pièce, pour la fonction commande de la roue à rochet, est un ressort filiforme, associé à un doigt porté par un manchon cylindrique emmanché sur un axe ; le manchon et son doigt sont solidarisés en rotation à l'arbre par une goupille traversant diamétralement le manchon et l'arbre en dépassant d'un côté du manchon pour réaliser un toc d'appui pour le fond d'une boucle ouverte d'un ressort filiforme conformé en une sorte de patère, ledit ressort filiforme étant adapté à soumettre le doigt de commande à un couple de torsion appliquant l'extrémité du doigt sur la roue à rochet.

De préférence, le support comprend des ailes qui sont munies sur leur bord opposé à l'âme d'échancrures ouvertes du côté des trous pour l'axe, ces échancrures faisant un léger angle avec le plan de l'âme et ayant une largeur adaptée à recevoir l'axe du doigt de commande.

Avantageusement, le plateau de pression présente vers sa périphérie externe un embrèvement faisant face au couvercle et permettant de loger le dispositif de rattrapage d'usure.

De préférence, le doigt de commande est directement actionné par la périphérie externe du diaphragme.

Avantageusement, les dents de la roue à rochet sont taillées à la périphérie externe du filet de la vis sans fin. Cette disposition est économique et simple ; la pièce est plus légère, moins complexe ; la roue à rochet peut ainsi comporter plus de dents ; l'encombrement axial est plus faible ; l'usinage est plus facile et la fiabilité est meilleure.

De préférence, le support est en forme générale de L ayant deux ailes dont l'une est destinée à supporter l'axe et dont l'autre est destinée à la fixation du support sur le couvercle ; l'aile supportant l'axe traverse le diaphragme entre deux de ses doigts.

Avantageusement, l'organe élastique est en forme générale de cavalier et comprend un corps plan portant à chacune de ses extrémités un bras muni d'un trou adapté à recevoir l'axe ; les deux bras sont parallèles et s'étendent du même côté et globalement perpendiculairement par rapport au corps ; sur l'un de ses bords longitudinaux, le corps se prolonge selon une extension qui comprend une première partie dans le prolongement du corps, une deuxième partie dirigée dans le sens opposé à celui des bras en faisant un angle aigu avec le corps, une troisième partie formant un U avec la deuxième partie et s'étendant parallèlement à celle-ci, et une quatrième partie dirigée vers le corps en étant parallèle à celui-ci, à un niveau légèrement supérieur en sorte qu'elle s'étend entre les bras; cette quatrième partie constitue directement ou non une languette de commande ; une échancrure ménagée dans chacun des bras limite la course de la languette de commande, parallèlement au corps, au moins en éloignement du corps ; sur son bord longitudinal opposé à celui où se situe l'extension, le corps porte un cliquet anti-retour constitué d'au moins deux lames de longueurs différentes, la différence de ces longueurs étant de l'ordre d'une demi-dent.

Avantageusement, le moyen élastique de rattrapage est un ressort enroulé autour de l'axe en étant placé dans un logement prévu à l'intérieur de la roue à rochet ou vis sans fin ; en variante, le moyen élastique de rattrapage est à l'extérieur de la vis sans fin en étant réalisé sous forme d'un étrier élastique chevauchant ladite vis.

De préférence, le support est constitué d'au moins une lamelle élastique liée, d'un côté, à l'axe autour duquel est montée à rotation la vis sans fin et, de l'autre côté, au couvercle.

Avantageusement, l'axe est incliné, par rapport à un plan perpendiculaire à l'axe de l'embrayage, d'un angle égal à celui du filet de la vis sans fin.

En variante, l'embrayage comprend plusieurs dispositifs de rattrapage d'usure, par exemple trois, également répartis circonférentiellement.

Pour mieux faire comprendre l'objet de l'invention, on va en décrire maintenant, à titre d'exemples, purement illustratifs et non limitatifs, des modes de réalisation représentés sur les dessins annexés.
- la figure 1 est une vue partielle en coupe, selon II de la figure 2, d'un embrayage équipé d'un dispositif de rattrapage d'usure selon l'invention ;
- la figure 2 est une vue partielle en coupe de l'embrayage, selon II-II de la figure 1, partiellement arraché ;
- la figure 3 est une vue partielle en coupe selon III-III de la figure 2 ;
- la figure 4 est une vue en perspective du dispositif de rattrapage sans son support ;
- la figure 5 est une vue en perspective montrant l'organe élastique ;
- les figures 6 à 8 montrent le support du dispositif de rattrapage : la figure 6 est une vue en plan, la figure 7 est une vue en coupe selon VII-VII de la figure 6, et la figure 8 est une vue en coupe selon VIII-VIII de la figure 6 ;
- la figure 9 est une vue partielle en plan montrant l'appendice actionneur du diaphragme ;
- la figure 10 est une vue de côté, selon la flèche X de la figure 11, montrant les moyens à rampes ;
- la figure 11 est une vue en plan, avec arrachement partiel, de l'embrayage sans son diaphragme ;
- la figure 12 est une vue en coupe selon XII-XII de la figure 11 ;
- la figure 13 est une vue en coupe selon XIII-XIII de la figure 11 ;
- la figure 14 est une vue en coupe selon XIV-XIV de la figure 11 ;
- la figure 15 est une vue en coupe selon XV-XV de la figure 11 ;
- les figures 16 à 19 sont des vues en coupe partielle analogue à la figure 1, montrant diverses positions des éléments constitutifs de l'embrayage; sur la figure 16 l'embrayage est débrayé, garnitures neuves ; sur la figure 17 l'embrayage est embrayé garnitures usées ; sur la figure 18 l'embrayage est débrayé, garnitures usées, et sur la figure 19, l'embrayage est embrayé, usure rattrapée ;
- la figure 20 est une vue partielle en plan d'un embrayage équipé d'une variante de dispositif de rattrapage d'usure selon l'invention ;
- la figure 21 est une vue en coupe selon XXI-XXI de la figure 20 ;
- la figure 22 est une vue en perspective montrant le dispositif des figures 20 et 21 sans son support ;
- la figure 23 est une vue en perspective du support ;
- la figure 24 est une vue en perspective du dispositif élastique ;
- la figure 25 est une vue latérale selon la flèche XXV de la figure 20 ;
- la figure 26 est une vue partielle en plan montrant l'appendice actionneur du diaphragme ;
- la figure 27 est une vue partielle en plan d'un embrayage équipé d'une autre variante de dispositif de rattrapage d'usure selon l'invention ;
- la figure 28 est une vue partielle en coupe selon XXVIII-XXVIII de la figure 27 ;
- la figure 29 est une vue partielle latérale selon la flèche XXIX de la figure 27 ;
- les figures 30 à 33 sont des vues en perspectives montrant, respectivement, le support, le cliquet anti-retour, la languette de commande et son ressort associé ;
- la figure 34 est une vue partielle en plan d'un embrayage équipé d'encore une autre variante de dispositif de rattrapage d'usure selon l'invention ;
- la figure 35 est une vue partielle en coupe selon XXXV-XXXV de la figure 34 ;
- la figure 36 est une vue partielle latérale selon la flèche XXXVI de la figure 34 ;
- la figure 37 est une vue en perspective du support seul ;
- la figure 38 est une vue en perspective du dispositif sans son support ;
- la figure 39 est une vue partielle en plan d'un embrayage équipé d'encore une autre variante de dispositif de rattrapage d'usure selon l'invention ;
- la figure 40 est une vue partielle en coupe selon XLX-XLX de la figure 39 ;
- la figure 41 est une vue partielle latérale selon la flèche XLI de la figure 39 ;
- la figure 42 est une vue en coupe du support portant la vis sans fin ;
- la figure 43 est une vue en perspective de la vis sans fin intégrant la roue à rochet ;
- la figure 44 est une vue en perspective de l'organe élastique ;
   les figures 45 à 47 représentent chacune respectivement une variante du ressort d'actionnement ;
- la figure 48 est analogue à la figure 40 et représente une variante.

Dans ces figures, l'embrayage à diaphragme 3, 53, 203 comporte un couvercle 2, 52, 202 de forme creuse.

Ici, le couvercle est métallique en étant en tôle emboutie.

Ce couvercle comporte un fond et des moyens pour sa fixation à un plateau de réaction, éventuellement divisé pour formation d'un volant amortisseur.

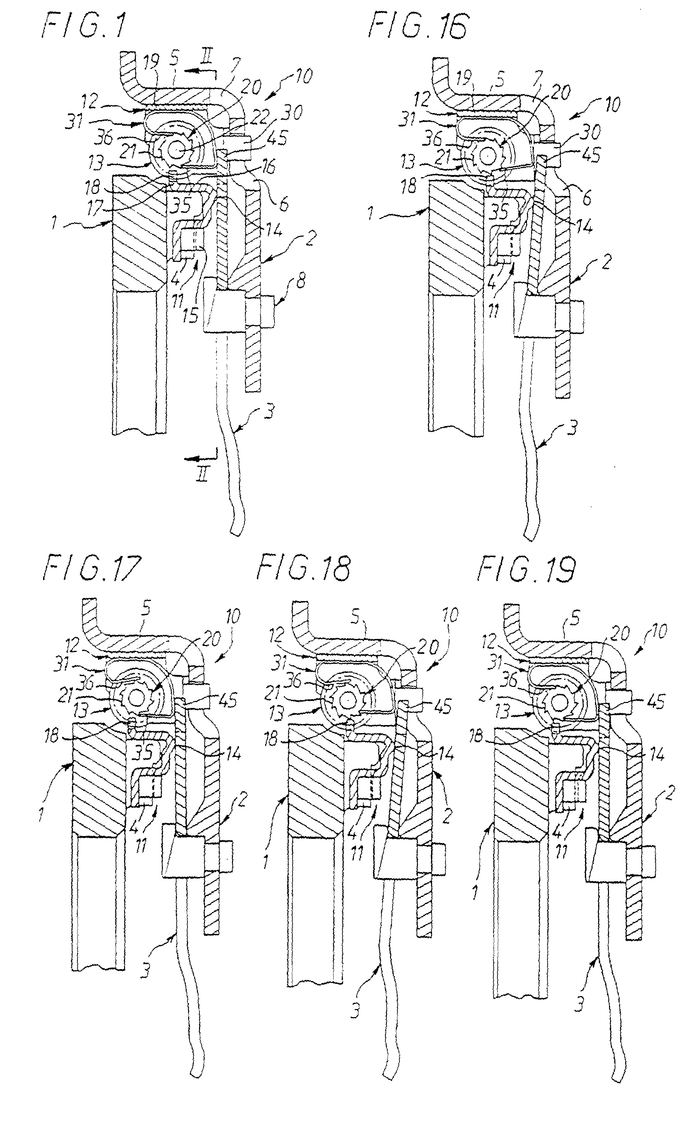

Dans les modes de réalisation des figures 1 à 38, le couvercle 2, 52 est globalement en forme d'assiette creuse et comporte à sa périphérie externe un rebord radial formant des moyens de fixation du couvercle au plateau de réaction, ledit rebord étant doté de trous pour passage d'organes de fixation, tels que des vis, du couvercle au plateau de réaction.

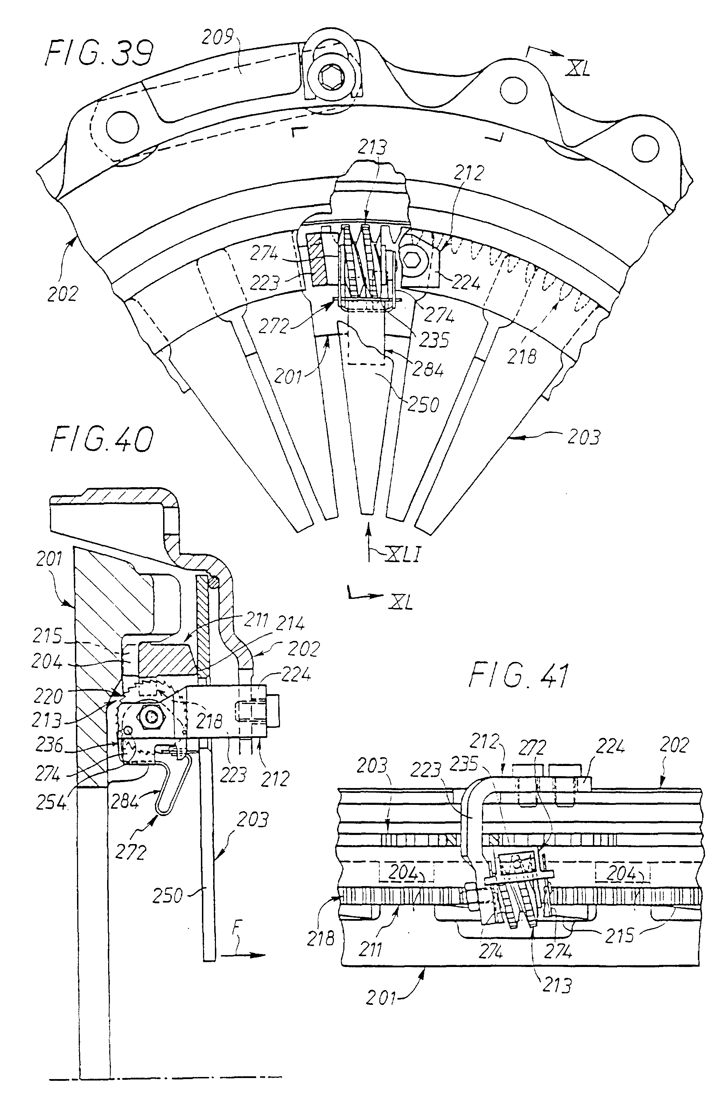

Dans les modes de réalisation des figures 39 à 48, les moyens de fixation du couvercle consistent en une jupe annulaire d'orientation axiale prolongeant un rebord radial doté de trous pour passage des organes de fixation, tels que des vis, du couvercle 202 au plateau de réaction.

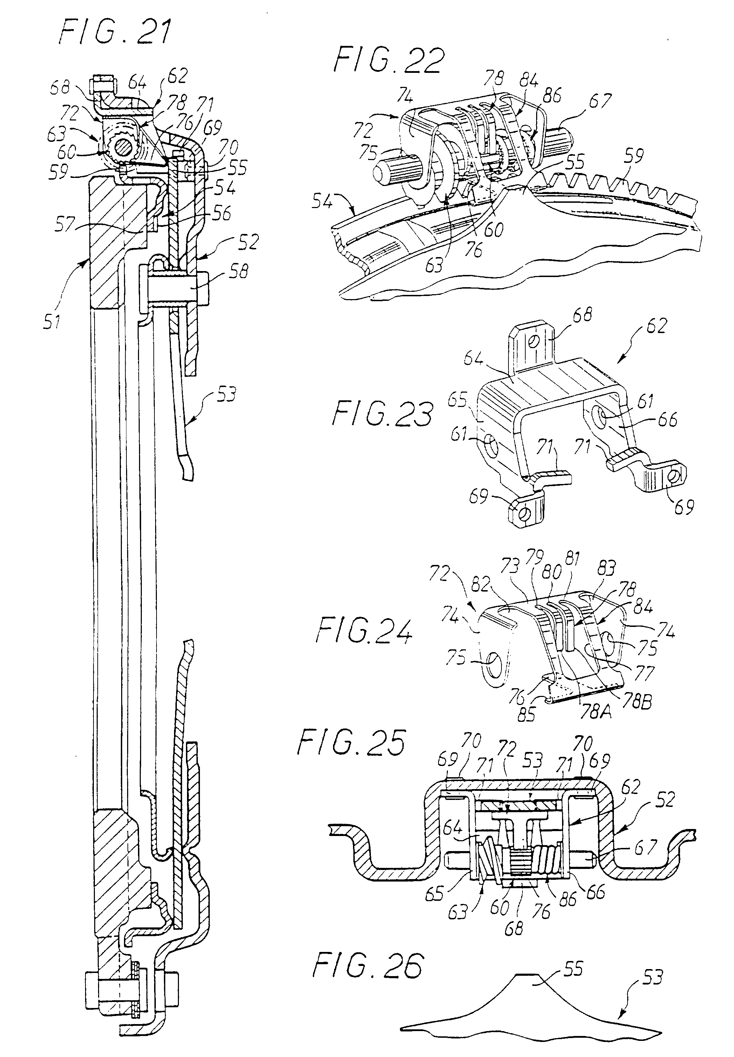

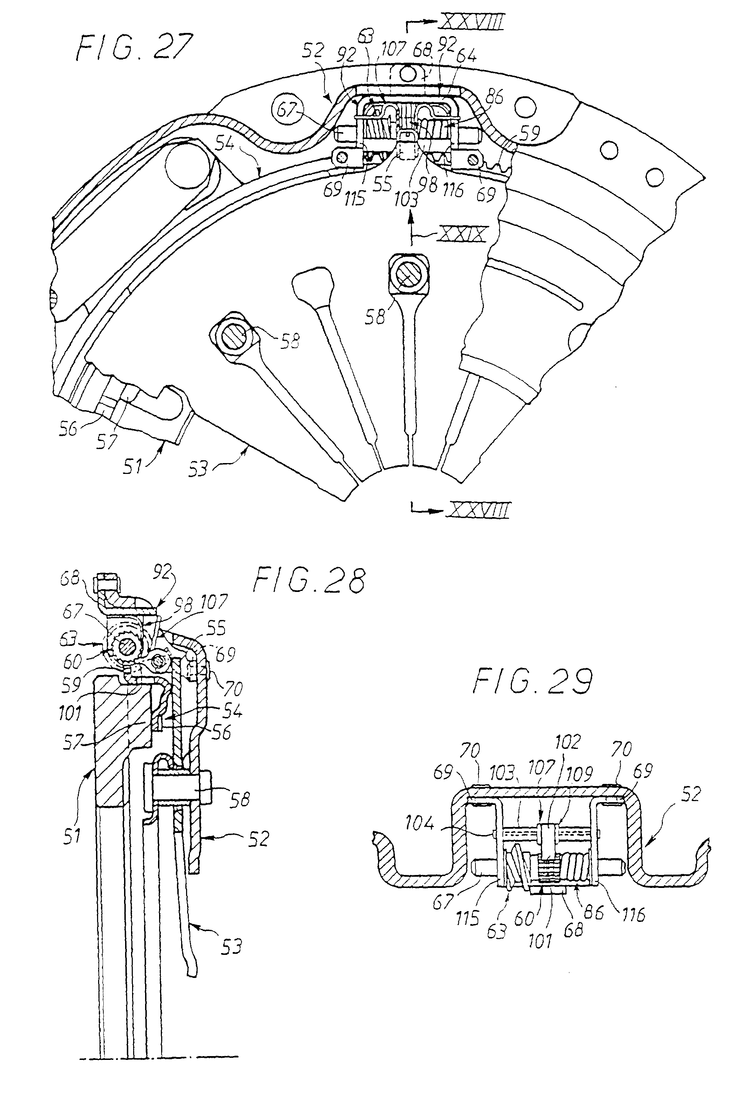

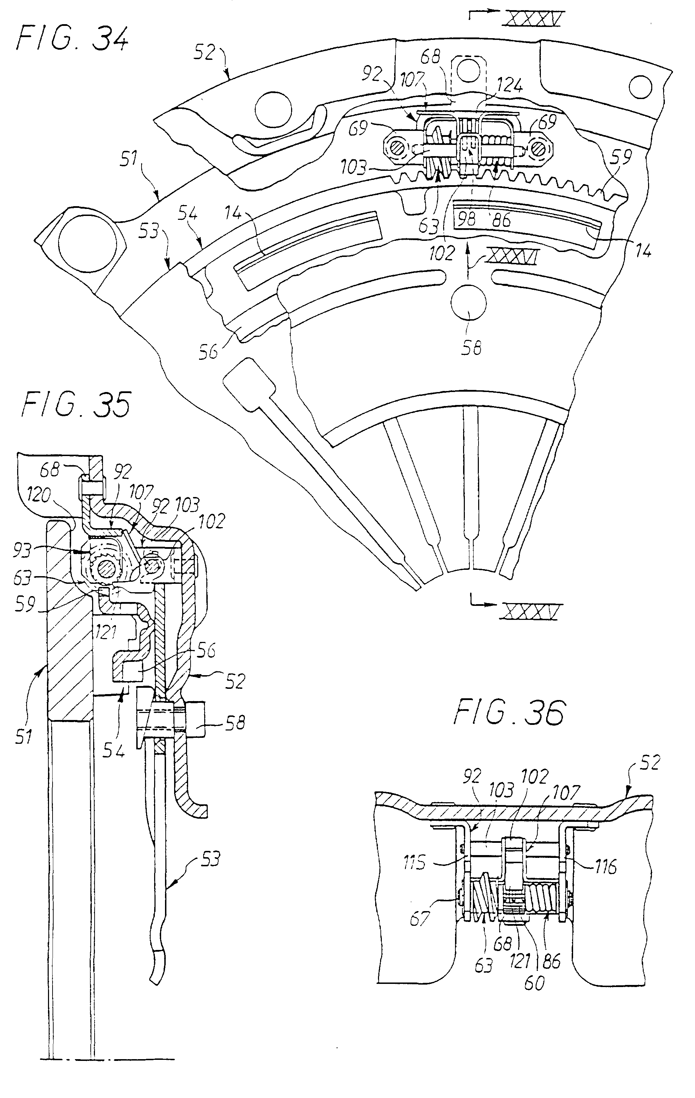

Dans le mode de réalisation des figures 1 à 38, l'embrayage est du type poussé, c'est-à-dire qu'il faut, à l'aide d'une butée de débrayage, non représentée, agir en poussant sur l'extrémité interne des doigts du diaphragme 3, 53 pour désengager (débrayer) l'embrayage, les dits doigts formant des moyens débrayeurs pour contrecarrer, sous l'action de la butée de débrayage, l'action des moyens embrayeurs constitués par la partie périphérique de forme annulaire du diaphragme. Pour ce faire, le fond du couvercle 2, 52 porte, d'une part, un appui primaire consistant par exemple en un jonc, ou dans les figures 1, 21, 28, 35 en un embouti réalisé dans le fond du couvercle à la périphérie interne de celui-ci, et, d'autre part, en regard de l'appui primaire, un appui secondaire sous forme de têtes de colonnettes 8, 58 (figures 1, 35), de couronne roulée portée par des colonnettes 58 (figures 21, 28), ou tout autre moyen. Le diaphragme 3, 53, par la périphérie interne de sa rondelle Belleville, est monté de manière basculante entre lesdits appuis primaire et secondaire. Par la périphérie externe de sa rondelle Belleville, il est en contact avec des zones d'appui 14, décrites ci-après.

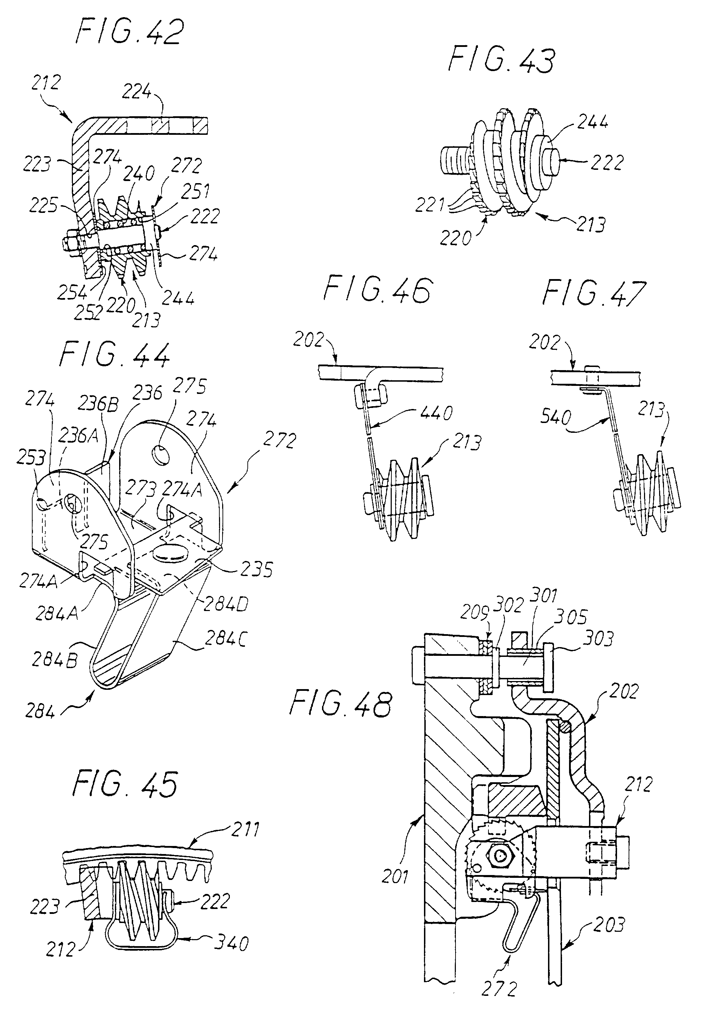

Dans les modes de réalisation des figures 39 à 48, l'embrayage est du type tiré en sorte qu'il faut agir en traction sur l'extrémité interne des doigts du diaphragme 203 pour désengager (débrayer) l'embrayage. La partie périphérique externe de la rondelle Belleville du diaphragme prend appui sur le fond du couvercle, dans les figures 40 et 48 sur un jonc non référencé porté par la périphérie externe du fond du couvercle, en variante sur un embouti ménagé dans ledit fond. La partie périphérique interne de cette rondelle Belleville est en contact avec un appui 214 décrit ci-après.

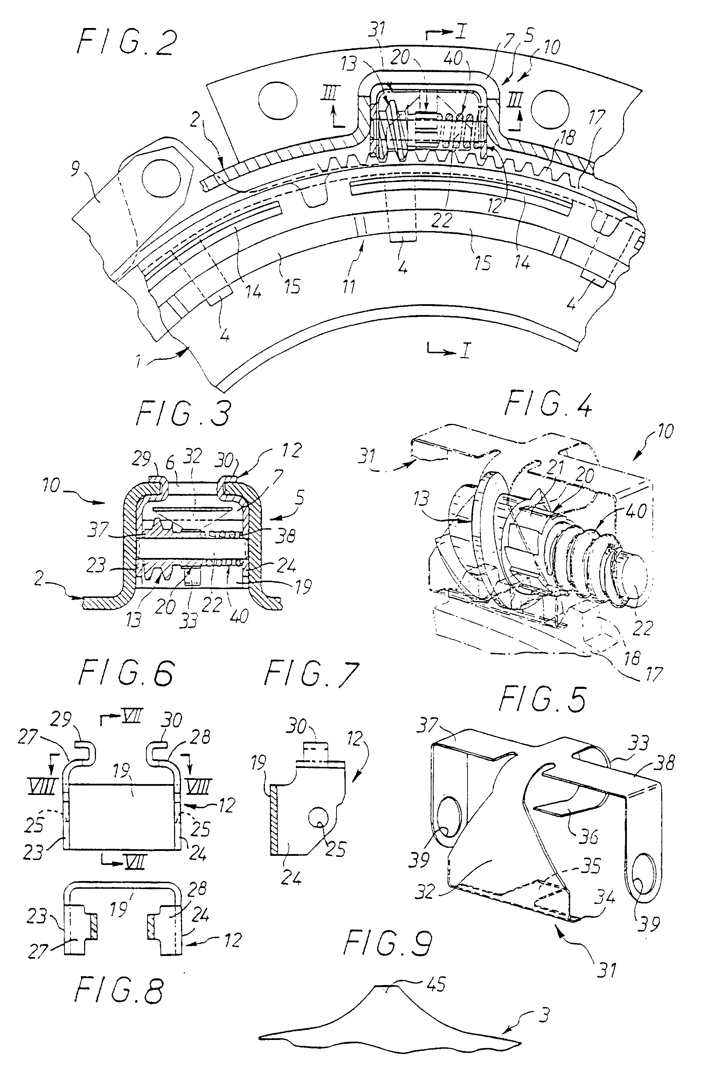

En se reportant aux figures 1 et 2, on voit un mécanisme d'embrayage à friction, notamment pour véhicule automobile, qui comprend un plateau de pression 1 destiné à coopérer avec un disque de friction non représenté, portant à sa périphérie externe des garnitures de friction, qui coopère lui-même avec un plateau de réaction. Le plateau de réaction, non représenté, est destiné à être calé en rotation sur un arbre menant, tel que le vilebrequin du moteur à combustion interne. Le disque de friction est solidaire en rotation d'un arbre mené tel que l'arbre d'entrée de la boîte de vitesses. Le disque de friction et le plateau de réaction sont représentés de manière schématique par exemple dans le document US-A-5 090 536 ou FR-A-2 599 446, le disque de friction pouvant être du type rigide ou progressif.

Le plateau de pression 1 est solidaire en rotation d'un couvercle 2 de forme creuse par l'intermédiaire de languettes tangentielles 9 qui, élastiques, constituent en même temps des moyens de rappel du plateau de pression 1 vers le couvercle 2, ici métallique en tôle emboutie.

Le plateau de pression 1, tout en étant solidaire en rotation du couvercle 2, est donc déplaçable axialement par rapport au couvercle 2 sous la sollicitation de moyens élastiques à action axiale commandés, ici un diaphragme 3 monté articulé sur le couvercle 2 grâce à des colonnettes 8 portées par le fond du couvercle 2 troué centralement. De manière connue, la colonnette 8 présente une tête profilée offrant un appui secondaire au diaphragme en regard d'un appui primaire formé par emboutissage du fond du couvercle 2 de forme creuse. Le diaphragme est monté pivotant entre ces appuis.

Pour maintenir, lorsque l'embrayage est embrayé, les moyens élastiques à action axiale 3, formant moyens embrayeurs par l'intermédiaire de la partie périphérique en forme de rondelle Belleville du diaphragme, dans une position indépendante de l'usure des garnitures du disque de friction, et dans une moindre mesure l'usure des plateaux de pression 1 et de réaction dont les faces, dites de friction, s'usent au contact des garnitures du disque, il est prévu un dispositif de rattrapage d'usure 10.

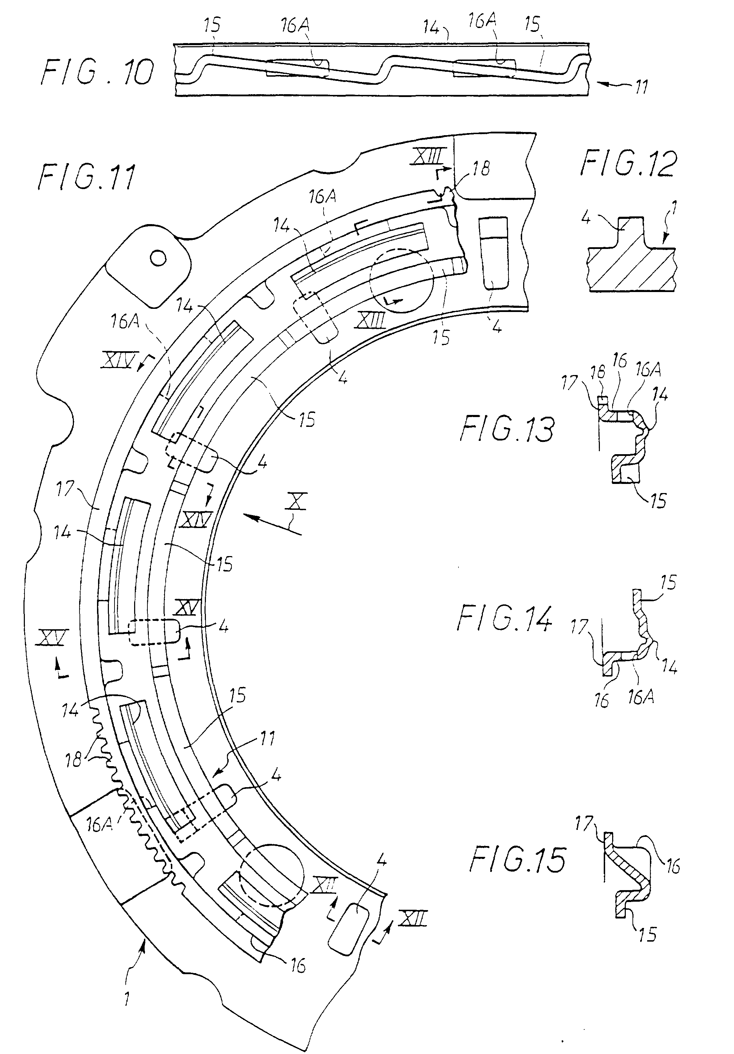

Le dispositif de rattrapage d'usure 10 comprend des moyens à rampes 11 disposées circonférentiellement ; plus précisément, ces moyens à rampes 11, mieux visibles sur les figures 2 et 10, sont constitués d'un anneau en tôle découpée et emboutie de façon à présenter des rampes 15 disposées circonférentiellement ; ledit anneau présente également des zones d'appui 14 constituées par l'arête supérieure arrondie d'emboutis en arcs de cercle centrés sur l'axe de l'embrayage et placés radialement à l'extérieur par rapport aux rampes 15.

Le plateau de pression 1 présente, ici venus de moulage, sur sa face tournée vers le fond du couvercle 2, radialement au-delà des colonnettes 8, des plots 4 répartis circonférentiellement à une distance l'un de l'autre qui correspond à celle qui sépare circonférentiellement deux rampes 15 successives, les plots 4 étant destinés à coopérer chacun avec une rampe 15.

Les moyens à rampes 11 sont placés axialement entre le diaphragme 3 et le plateau de pression 1 en sorte que les plots 4 reçoivent les rampes 15 et le diaphragme 3 coopère avec les zones d'appui 14 qui constituent ainsi les moyens d'appui par l'intermédiaire desquels le diaphragme 3 agit sur le plateau de pression 1. Cette disposition est économique et simple, les moyens à rampes 11 étant métalliques et obtenus par emboutissage.

L'une des zones d'appui 14 des moyens à rampes 11 est prolongée, figures 1 et 13, à sa périphérie externe par un rebord 16 parallèle à l'axe de l'embrayage se terminant selon un retour 17 transversal, c'est-à-dire s'étendant dans un plan perpendiculaire à l'axe de l'embrayage, muni à sa périphérie d'une denture 18, en sorte que les zones d'appui 14 peuvent être continues et que le rebord est centré par une surépaisseur en forme de bossage du plateau de pression 1.

Avantageusement, le rebord axial 16 des moyens à rampes 11 présente des ouvertures 16A, ici de forme rectangulaire, facilitant leur ventilation.

Le rebord axial 16 est par sa périphérie interne en contact intime avec la périphérie externe d'un bossage du plateau de pression en sorte que le rebord axial 16 centre les moyens à rampes 11 par rapport au plateau de pression 1. Plus précisément le plateau de pression 1 présente à sa périphérie externe un bossage fractionné saillant en direction du fond du couvercle. Ce bossage de forme annulaire sert de centreur au rebord 16.

Le dispositif de rattrapage d'usure 10 comprend par ailleurs une roue à rochet 20 à dents inclinées 21 solidaire d'un axe 22 qui porte également une vis sans fin 13 ; le filet et le pas de la vis sans fin 13 sont adaptés à la denture 18 des moyens à rampes 11 ; la vis sans fin 13 est amenée à coopérer avec la denture 18 dans les conditions qui seront décrites ci-après.

L'axe 22 de la roue à rochet 20 est porté à rotation par un support 12, mieux visible sur les figures 6 à 8, en tôle découpée et pliée, en forme de U ayant une âme 19 et deux ailes 23, 24 destinées à supporter l'axe 22 ; à cet effet, chacune des ailes porte un trou circulaire 25 adapté au diamètre de l'axe 22.

Les ailes 23, 24 du support 12 se prolongent extérieurement selon des bras 27, 28 en forme de L s'étendant l'un vers l'autre perpendiculairement à l'âme 19 et se terminant chacun, lorsque le support 12 est monté sur le couvercle 2, par une extrémité en forme de C, respectivement 29 et 30, les deux extrémités en forme de C 29 et 30 étant disposées dos à dos au droit l'une de l'autre.

Le couvercle 2 présente une excroissance radiale 5 définissant un logement pour le dispositif 10 de rattrapage d'usure ; ce logement communique avec l'extérieur par une ouverture transversale 6 percée dans la paroi transversale du couvercle 2 ; les bords de cette ouverture transversale 6 sont adaptés à recevoir les extrémités 29 et 30 en forme de C du support 12 qui sont serties sur ces bords, comme le montre la figure 3, et qui, ainsi, fixent le support 12 sur le couvercle ; les figures 1, 2 et 3 montrent que le support 12 s'adapte parfaitement dans le logement, défini par l'excroissance radiale 5, ledit logement et le support 12, ici métallique, ayant des formes complémentaires ; à la jonction entre la paroi transversale du couvercle et le prolongement de la jupe cylindrique du couvercle qui limite ledit logement, une ouverture 7 facilite la ventilation du dispositif 10. Le support 12 est monté radialement au-dessus du plateau de pression 1.

Le support 12 est adapté à recevoir un organe élastique 31 de plus faible épaisseur que le support 12, mieux visible sur les figures 4 et 5 ; l'organe élastique 31, ici métallique, est en forme générale de crosse dont chaque extrémité est munie d'un retour vers l'intérieur ; plus précisément, la partie 32 de plus grande longueur de la crosse croit en largeur vers son extrémité se terminant selon un retour 34 qui porte en bout une languette de commande 35 ; la partie 33 de plus petite longueur de la crosse a son retour 36, dit cliquet anti-retour, qui s'étend globalement parallèlement à la languette de commande 35 en étant à distance de celle-ci en sorte que, lorsque l'organe élastique 31 et la roue à rochet 20 sont montés dans le support 12, le cliquet anti-retour 36 et la languette de commande 35, formant pièce de commande, coopèrent chacun avec un pied de dent, les deux dents concernées étant ici pratiquement diamétralement opposées, comme le montre la figure 1 ; pour son montage dans le support 12, l'organe élastique 31 porte latéralement des bras en équerre 37, 38 disposés de part et d'autre de la partie élastique en forme de crosse, orthogonalement par rapport à celle-ci, et l'extrémité libre des bras 37, 38 en équerre porte des trous 39 dont le diamètre correspond à celui de l'axe 22.

Lorsque l'organe élastique 31 est monté dans le support 12, les extrémités libres des bras 37, 38 s'étendent entre les ailes 23, 24 du support 12, le long de celles-ci ; un ressort hélicoïdal 40 de compression est placé entre la roue à rochet 20 et l'extrémité libre du bras 38, en étant enroulé autour de l'axe 22 ; la vis sans fin 13 et la roue à rochet 20 sont taillées dans une même pièce ; comme on le voit, le support 12 équipé de cette même pièce, de l'organe élastique 31, du ressort 40 et de l'axe 22 constitue un sous-ensemble prêt à être installé dans le couvercle 2.

Le ressort hélicoïdal 40 constitue le moyen élastique de rattrapage, comme décrit ci-dessous ; la roue à rochet 20 est au droit du cliquet anti-retour 36 qui, par coopération avec les dents 21 inclinées de la roue à rochet 20, empêche de tourner la roue à rochet 20, ainsi que la vis sans fin 13, dans le sens contraire à celui des aiguilles d'une montre, par rapport aux figures 1 et 16 à 19.

Le support 12, portant la roue à rochet 20, la vis sans fin 13 et le ressort hélicoïdal 40, étant solidaire du couvercle 2, le diaphragme 3 se déplace par rapport à lui lors des opérations de débrayage et de ré-embrayage ; le diaphragme 3 porte à sa périphérie un appendice radial dit actionneur 45, figure 9, s'étendant radialement à l'extérieur de la partie rondelle Belleville du diaphragme 3 pour coopérer avec la zone élargie de la partie de grande longueur 32 de l'organe élastique 31 ; on comprendra que, grâce à cette disposition, lors du basculement du diaphragme 3 lors des opérations de débrayage et de ré-embrayage, l'actionneur 45 déplace cette partie 32 de la droite vers la gauche, par rapport à la figure 1, et la languette de commande 35, par coopération avec les dents 21 de la roue à rochet 20, est -amenée à faire tourner la roue à rochet 20 dans le sens horaire ; lorsque l'actionneur 45, au retour, est déplacé de la gauche vers la droite, l'élasticité de la partie 32 de l'organe élastique 31 et l'inclinaison des dents 21 font que cette partie 32 se déplace vers la droite en montant sur les dents 21 qui sont maintenues fixes en rotation par le cliquet anti-retour 36 et/ou les frottements internes.

Le dispositif de rattrapage de jeu qui vient d'être décrit fonctionne comme suit, sachant que le système denture 18- vis sans fin est irréversible, la vis 13 pouvant entraîner la denture 18 et pas l'inverse.

La figure 1 représente l'embrayage engagé, les garnitures du disque de friction étant à l'état neuf et serrées entre le plateau de réaction, non représenté, et le plateau de pression 1. Dans cette position, la languette de commande 35 et le cliquet anti-retour 36, tous deux élastiquement déformables, ont leur extrémité au pied d'une dent de la roue à rochet 20.

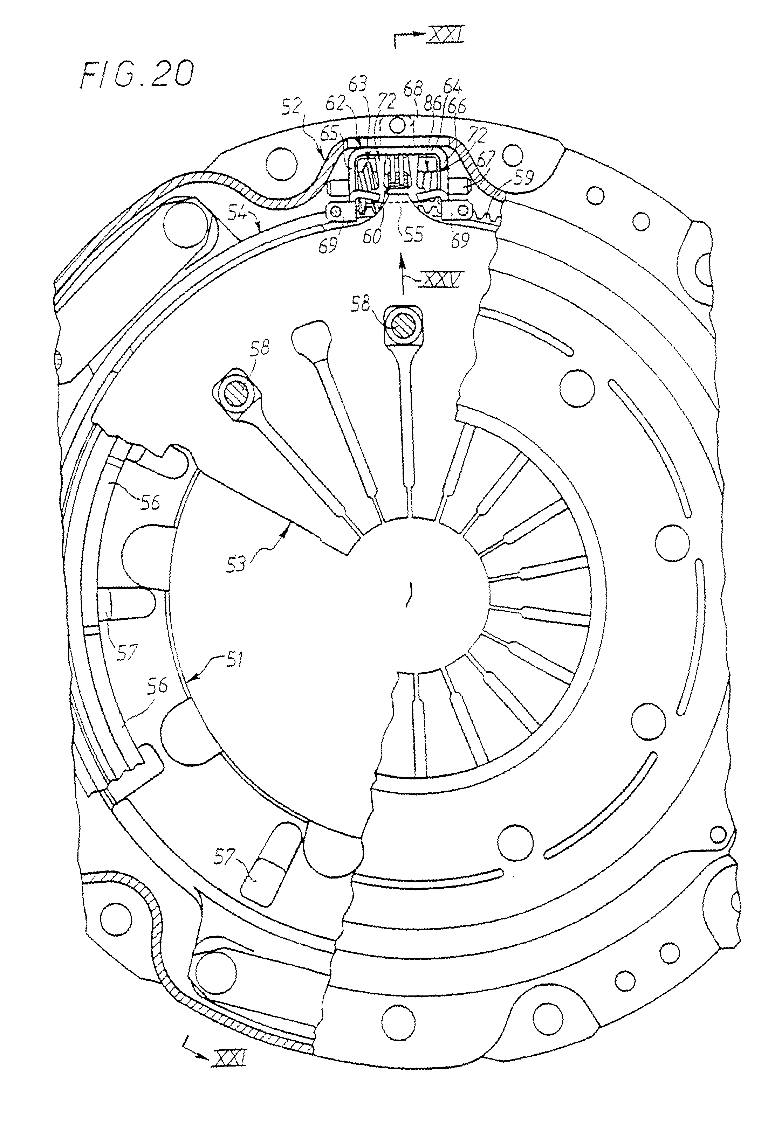

Lorsque l'embrayage est débrayé, le diaphragme 3 a basculé autour des colonnettes 8 entraînant à sa périphérie son appendice actionneur 45 vers le fond du couvercle 2 ; dans son déplacement, l'actionneur 45 libère progressivement la languette de commande 35 dont l'extrémité suit la rampe inclinée constituée par la dent dans le pied de laquelle elle se trouvait dans l'étape précédente, les dents 21 de la roue à rochet 20 étant réalisées en sorte que, lors de cette course de débrayage garnitures neuves, l'extrémité de la languette de commande 35 ne saute pas une dent, le cliquet anti-retour 36 maintenant la roue à rochet 20 ; ceci est obtenu par la venue en butée de la partie 32 de l'organe élastique 31, contre le support 12, plus précisément contre les bras 27, 28 du support 12 qui constituent une butée de contrôle et, selon une caractéristique de l'invention, limitent la course de retour de cette partie 32 quelle que soit celle de l'actionneur 45 du diaphragme 3, comme le montre la figure 16.

Lorsque les garnitures s'usent, comme on le sait le plateau de pression 1, toujours soumis à l'effort axial du diaphragme 3, se rapproche du plateau de réaction qui est fixe axialement comme le couvercle 2 ; l'actionneur 45 du diaphragme 3 se rapproche donc du plateau de réaction, c'est-à-dire donc de l'extrémité ouverte du couvercle 2, en entraînant dans son mouvement la languette de commande 35 ; la roue à rochet 20 tourne autour de son axe dans le sens horaire, sens pour lequel le cliquet anti-retour 36 n'assure pas sa fonction mais peut sauter d'une dent à l'autre ; l'embrayage engagé, garnitures usées, est représenté sur la figure 17. Cet entraînement en rotation de la roue à rochet 20 conduit la vis sans fin 13 à tourner également d'une petite quantité sur son axe ; les moyens de rampes 11 étant immobilisés par rapport au couvercle 3 sous l'effet de la charge du diaphragme 3, la vis sans fin 13 qui engrène avec la denture 18 des moyens de rampes 11 se visse en quelque sorte sur cette denture 18 en comprimant le ressort hélicoïdal 40, le sens du filet de la vis sans fin 13 étant prévu en sorte qu'il en soit ainsi.

Lors de l'opération de débrayage qui suit la phase d'usure qui vient d'être décrite, le plateau de pression 1 libère les garnitures en s'éloignant d'elles sous l'action des languettes tangentielles 9 qui ramènent vers le fond du couvercle 2 le plateau de pression 1 ainsi que les moyens à rampes 11 en contact avec le diaphragme 3 par leurs zones d'appui 14 et avec les plots 4 du plateau de pression 1 par leurs rampes 15. Le ressort hélicoïdal 40 sollicite la vis sans fin 13 vers l'aile 23 du support 12, qu'elle a quittée en phases d'usure, c'est-à-dire de la droite vers la gauche par rapport aux figures 2 et 3 , la charge du diaphragme 3 n'étant plus appliquée sur les moyens à rampes 11, le seul effort à vaincre pour pouvoir faire tourner ces moyens à rampes 11 par rapport au plateau de pression 1 est l'effort de frottement généré par l'effort de rappel des languettes tangentielles 9 ; si la charge du ressort hélicoïdal 40 est suffisante pour vaincre cet effort, alors le ressort 40 déplace la vis sans fin 13 qui est empêchée de tourner sur elle-même par la pression du cliquet anti-retour 36 et qui entraînera la denture 18 : en tournant sur elles-mêmes, les rampes 15 des moyens à rampes 11, par coopération avec les plots 4 du plateau de pression 1, éloigneront le plateau de pression 1 du fond du couvercle 2, augmentant ainsi la distance axiale entre la face de travail du plateau de pression 1 et les zones d'appui 14 des moyens à rampes 11, rattrapant (compensant) ainsi au moins en partie le déplacement du plateau de pression 1 dû à l'usure des garnitures. La charge du ressort hélicoïdal 40 étant fonction de la quantité dont il aura été comprimé par la vis sans fin 13 durant les phases d'usure, on voit que plusieurs opérations d'embrayage et de débrayage peuvent être nécessaires avant que le dispositif de rattrapage d'usure 10 n'entre en phase de rattrapage proprement dite, ceci étant fonction du dimensionnement relatif des pièces concernées ; à titre d'exemple, celles-ci peuvent être réalisées de telle sorte que cette phase de rattrapage proprement dite n'intervienne la première fois qu'après une usure correspondant à trois dixièmes de millimètres ; sur la figure 18, qui correspond à l'embrayage débrayé garnitures usées, on a supposé qu'il n'y a pas eu de rattrapage ; on a supposé également que l'usure a été suffisante pour que la roue à rochet 20 ait suffisamment tourné de sorte qu'au retour la languette de commande 35 a sauté une dent.

Lors de l'opération d'embrayage, la languette de commande 35, poussée par l'actionneur 45, fait tourner la roue à rochet 20 et les moyens à rampes 11, non encore serrés par le diaphragme 3, tournent et rattrapent l'usure des garnitures ; en fin de l'opération de rattrapage, figure 19, le diaphragme 3, la roue à rochet 20, le cliquet anti-retour 36 et la languette de commande 35 retrouvent la position qu'ils occupaient à la figure 1.

Dans la variante qui vient d'être décrite, la vis sans fin 13 et la roue à rochet 21 sont d'une seule pièce ; bien entendu, la vis sans fin 13 pourrait être une pièce distincte et pourvue d'un alésage, ledit alésage et l'axe lui-même étant agencés de telle sorte que la vis sans fin peut coulisser le long de l'axe tout en étant solidaire en rotation dudit axe. Les figures 20 à 26 représentent une variante de dispositif de rattrapage d'usure ; sur ces figures, on reconnaît un embrayage comportant un plateau de pression 51, un couvercle 52, un diaphragme 53, muni d'un appendice actionneur 55, articulé sur le couvercle 52 grâce à des colonnettes 58 portant une couronne roulée offrant un appui secondaire au diaphragme 53 ; les moyens à rampes 54 comprennent des rampes 56 qui coopèrent avec des plots 57 du plateau de pression et une denture 59 coopère avec une vis sans fin 63 elle-même solidaire en rotation d'une roue à rochet 60, ayant un axe 67 sur lequel est enroulé un ressort 86. Le support 62, ici métallique, est monté radialement au-dessus du plateau de pression 1.

Ici, le support 62, mieux visible sur la figure 23, est en forme de U, ayant une âme 64 et deux ailes, 65 et 66, chacune portant un trou 61 adapté à recevoir l'axe 67 du dispositif ; l'âme 64 porte latéralement une patte 68 à l'équerre dirigée vers l'extérieur destinée à être fixée sur le rebord externe du couvercle 52 par un rivet. Le couvercle 52 présente une ouverture pour passage de l'âme 64 et est simplifié.

Les ailes 65 et 66 du support 62 présentent, du côté opposé à celui où est située la patte 68, un prolongement axial dont l'extrémité est pliée vers l'extérieur pour constituer une patte de fixation 69 parallèle à la patte 68 ci-dessus et destinée à être fixée au fond du couvercle 52 par un rivet 70 ; sur leur tranche dirigée vers l'âme 64, lesdits prolongements sont munis de retours 71 dirigés l'un vers l'autre en s'étendant globalement parallèlement à l'âme 64 et destinés à constituer des butées de contrôle dont le rôle apparaîtra ci-dessous ; les extrémités se faisant face desdits retours 71 sont à une distance suffisante l'une de l'autre pour permettre, sans le gêner, le débattement de l'actionneur 55 lors des opérations d'embrayage et de débrayage.

Ici, l'organe élastique 72, mieux visible sur la figure 24, est en forme de cavalier et comprend un corps 73 plan allongé portant à chacune de ses extrémités un bras 74 muni d'un trou 75 adapté à recevoir l'axe 67 ; les deux bras 74 sont parallèles, et s'étendent du même côté et globalement perpendiculairement par rapport au corps 73.

Sur l'un de ses bords longitudinaux, le corps 73 se prolonge selon une extension en oblique 84 du même côté que celui où sont placés les bras 74 ; des échancrures 82 et 83 ménagées dans le corps 73 limitent l'extension 84 par rapport aux extrémités du corps 73 portant les bras 74 ; par ailleurs, ces échancrures 82 et 83 confèrent à l'extension 84 une certaine élasticité.

L'extrémité libre de l'extension 84 est munie d'un retour 85 qui se prolonge selon une languette de commande 76 s'étendant en direction du corps 73 en étant globalement parallèle à celui-ci.

Une découpe 77 est ménagée dans l'extension 84 ; à la faveur de cette découpe 77, et d'échancrures 79, 80 et 81 dans le corps 73, est réalisé un cliquet anti-retour 78 composé de deux lames 78A et 78B ; les extrémités libres de celles-ci s'étendent globalement perpendiculairement au corps 73 et sont de longueurs légèrement différentes ; la différence de ces longueurs est telle que lorsque les lames 78A, 78B sont en appui élastique sur la roue à rochet 60, elle sont décalées parallèlement aux bras 74 d'une quantité inférieure à la longueur d'une dent de la roue à rochet 60 : ainsi, l'efficacité de la fonction anti-retour est améliorée, et ce par rapport à la solution où la roue à rochet ne coopère qu'avec une seule lame anti-retour.

Cette variante fonctionne de la même façon que la précédente ; notons qu'ici, lors de l'opération de débrayage, la course de retour, ou d'armement, de la languette de commande 76 est limitée par la venue en butée de l'extension 84 de l'organe élastique 72 contre les retours 71 du support 62 de plus grande épaisseur que l'organe élastique 72 métallique.

Les figures 27 à 33 représentent une autre variante ; sur ces figures, les pièces identiques à celles de la variante précédente portent les mêmes références que celles-ci et ne seront donc pas décrites. Ici, les fonctions anti-retour, d'une part, et commande de la roue à rochet 60, d'autre part, ne sont pas assurées par une même pièce comme dans les variantes précédentes.

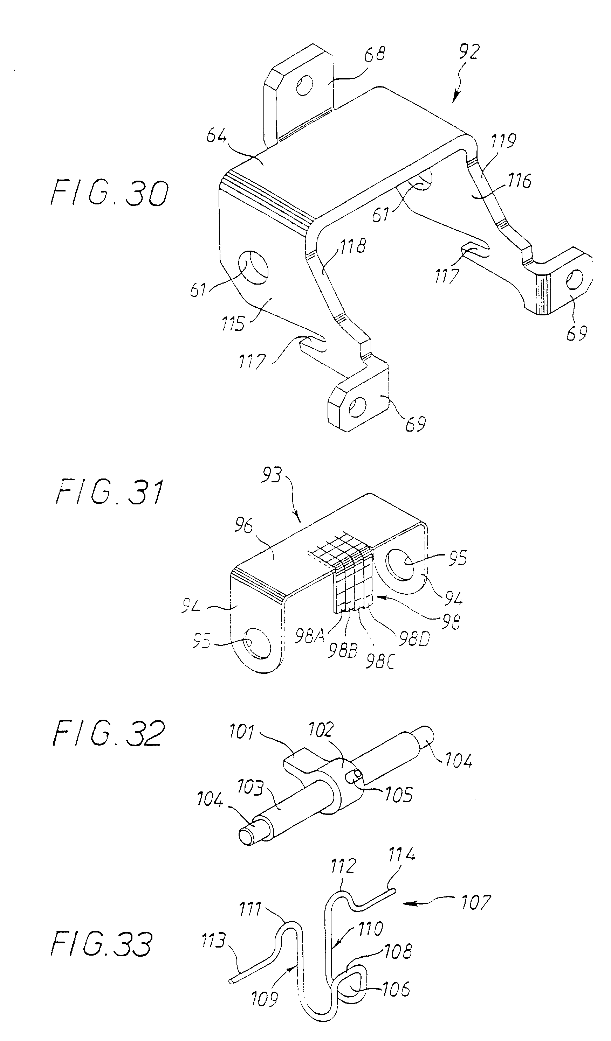

Ici, l'organe élastique comprend deux pièces distinctes ; une première pièce, pour la fonction anti-retour, est un étrier 93, ici métallique de plus faible épaisseur que le support 92, mieux visible sur la figure 31, en forme de U dont les deux ailes 94 portent des trous 95 pour supporter l'axe 67 ; l'âme 96 de cet étrier est, sur l'un de ses côtés, au voisinage de sa partie médiane, découpée en lames 98 A à D qui s'étendent dans une direction parallèle à celle des ailes 94 et se prolongent selon des retours en équerre dirigés du même côté que les ailes 94 par rapport à l'âme 96 globalement perpendiculairement à ladite âme 96 ; lesdits retours ont successivement des longueurs légèrement croissantes ; les lames 98A-D constituent un cliquet anti-retour 98 destiné à coopérer avec la roue à rochet 60.

Ici, les lames 98A-D au nombre de quatre permettent, par rapport à la version précédente à deux lames, une encore plus grande efficacité de la fonction anti-retour.

La seconde pièce, pour la fonction commande de la roue à rochet, mieux visible sur la figure 32, est un doigt 101 porté par un manchon cylindrique 102 emmanché sur un axe 103, dans la zone médiane de celui-ci, lequel axe 103 portant à chacune de ses extrémités une zone de plus petit diamètre ou pivot 104 ; le manchon 102 et son doigt 101 sont solidarisés en rotation à l'arbre 103 par une goupille 105 traversant diamétralement le manchon 102 et l'arbre 103, la goupille 105 dépassant d'un côté du manchon 102 pour réaliser un toc d'appui pour le fond 108 d'une boucle ouverte 106, figure 33, d'un ressort 107 filiforme conformé en une sorte de patère ; les deux brins libres 109 et 110 de la boucle 106 s'étendent sur une première partie de leur longueur parallèlement l'un à l'autre en décrivant une contre boucle ouverte en restant dans des plans perpendiculaires au fond 108 puis, sur une seconde partie de leur longueur, décrivent chacun, en s'éloignant l'un de l'autre, en restant dans un même plan parallèle à celui de la boucle ouverte 106, une anse 111, 112 et un segment terminal d'orientation axiale 113, 114, respectivement.

Ici, le support 92, mieux visible sur la figure 30, comprend des ailes 115 et 116, qui portent les pattes 69 et sont munies sur leur bord opposé à l'âme 64 d'échancrures 117 ouvertes du côté des trous 61 pour l'axe 67 ; ces échancrures 117 font un léger angle avec le plan de l'âme 64 et ont une largeur adaptée à recevoir les pivots 104 de l'axe 103 du doigt de commande 101.

Lorsque l'ensemble est monté, comme le montrent les figures 27, 28 et 29, les segments terminaux 113, 114 du ressort filiforme 107 sont en appui contre la tranche supérieure 118, 119 des ailes 115, 116 du support 92, respectivement, et le fond 108 de la boucle ouverte 106 en appui sur le toc 105 soumet le doigt de commande 101 à un couple de torsion appliquant l'extrémité du doigt 101 sur un pied de dent de la roue à rochet 63, l'une des lames 98A-D du cliquet anti-retour 98 étant également sur le pied d'une autre dent de ladite roue à rochet 63.

Plus précisément, ledit couple de torsion applique le doigt 101 sur les dents de la roue à rochet 63 tandis que l'appendice actionneur 55 du diaphragme 53, lorsque l'embrayage est embrayé, figure 28, prenant appui sur le manchon 102 qui porte le doigt 101, pousse celui-ci en fond de dent et fait tourner la roue à rochet 60 lors de l'usure ; lors d'un débrayage, l'appendice actionneur 55 se rapproche du fond du couvercle 52 en libérant le doigt 101 qui, rappelé par une composante axiale de l'effort du ressort filiforme 107, suit le diaphragme en montant le long de la dent concernée immobilisée par le cliquet anti-retour 98 ; dans ce mouvement de retour, le doigt 101 et son axe 103 suivent le diaphragme 53 puis quittent celui-ci lorsque les pivots 104 dudit axe 103 butent dans le fond des échancrures 117 du support 92 formant une butée de contrôle.

Le fonctionnement de ce dispositif est identique à celui des dispositifs précédemment décrits.

Les figures 34 à 38 montrent une autre variante d'embrayage selon l'invention qui présente quelques différences par rapport à la variante précédente.

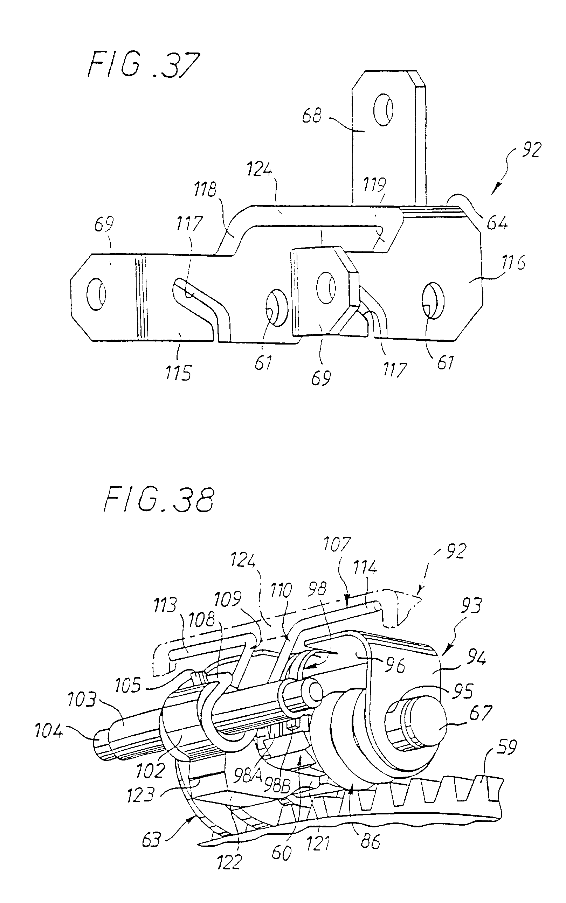

Ici, le plateau de pression 51 présente vers sa périphérie externe un embrèvement 120 faisant face au couvercle et permettant de loger le dispositif de rattrapage de jeu plus près de l'axe de l'embrayage, ce qui simplifie le couvercle 52 ; par ailleurs, ceci permet d'actionner le doigt 121 de commande décrit ci-dessous directement par la périphérie externe du diaphragme 53 : ceci évite de doter ce dernier d'un appendice actionneur et facilite donc sa fabrication ; pour ce faire, le doigt de commande 121, figure 38, est l'extrémité effilée d'un organe 122 en forme de tête de marteau dont le talon présente une arête 123 avec laquelle coopère la périphérie externe du diaphragme 53.

Ici, les brins libres 109, 110 du ressort filiforme 107 ne comportent pas d'anses, telles que les anses 111, 112 de la variante précédente, et les segments terminaux 113, 114 prennent appui sur le bord 124 prévu incliné de l'âme 64 du support 92.

Ici, le cliquet anti-retour 98 ne comporte que deux lames, 98A et 98B.

En se reportant aux figures 39 à 48, on voit un mécanisme d'embrayage à friction, notamment pour véhicule automobile, qui comprend un plateau de pression 201 destiné à coopérer avec un disque de friction non représenté, portant à sa périphérie externe des garnitures de friction, qui coopère lui-même avec un plateau de réaction. Le plateau de réaction, non représenté, est destiné à être calé en rotation sur un arbre menant, tel que le vilebrequin du moteur à combustion interne. Le disque de friction est solidaire en rotation d'un arbre mené tel que l'arbre d'entrée de la boîte de vitesses.

Le plateau de pression 201 est solidaire en rotation d'un couvercle 202 de forme creuse par l'intermédiaire de languettes tangentielles 209 qui, élastiques, constituent en même temps des moyens de rappel du plateau de pression 201 vers le couvercle 202.

Le plateau de pression 201, tout en étant solidaire en rotation du couvercle 202, est donc déplaçable axialement par rapport au couvercle 202 sous la sollicitation de moyens élastiques à action axiale commandés, ici un diaphragme 203 prenant appui sur le couvercle 202 par sa périphérie externe, l'embrayage étant ici du type tiré, l'opération de débrayage étant effectuée en agissant sur l'extrémité des doigts du diaphragme dans le sens de la flèche F de la figure 40.

Pour maintenir, lorsque l'embrayage est embrayé, les moyens élastiques à action axiale 203 dans une position indépendante de l'usure des garnitures du disque de friction, et dans une moindre mesure l'usure des plateaux de pression 201 et de réaction dont les faces, dites de friction, s'usent au contact des garnitures du disque, il est prévu un dispositif de rattrapage d'usure qui comprend des moyens à rampes 211 disposées circonférentiellement ; plus précisément, ces moyens à rampes 211, figures 40 et 41, sont métalliques en étant obtenus par emboutissage et constitués d'un anneau présentant des rampes 215 disposées circonférentiellement sur sa face tournée vers le plateau de pression 201 ; sur sa face opposée, ledit anneau présente une zone d'appui 214 constituée par une arête supérieure arrondie disposée en arc de cercle centré sur l'axe de l'embrayage. Bien entendu, ladite zone d'appui 214 peut être continue ou discontinue.

Le plateau de pression 201 présente, sur sa face tournée vers le fond du couvercle 202, des plots 204 venus ici de moulage répartis circonférentiellement à une distance l'un de l'autre qui correspond à celle qui sépare circonférentiellement deux rampes 215 successives, les plots 204 étant destinés à coopérer chacun avec une rampe 215.

Les moyens à rampes 211 sont placés axialement entre le diaphragme 203 et le plateau de pression 201 en sorte que les plots 204 reçoivent les rampes 215 et le diaphragme 203 coopère avec la zone d'appui 214 qui constitue ainsi les moyens d'appui par l'intermédiaire desquels le diaphragme 203 agit sur le plateau de pression 201.

La périphérie interne des moyens à rampes 211 est munie radialement d'une denture 218.

Le dispositif de rattrapage d'usure comprend par ailleurs une roue à rochet 220 à dents inclinées 221 montée tournante autour d'un axe 222 qui porte également une vis sans fin 213 ; le filet et le pas de la vis sans fin 213 sont adaptés à la denture 218 des moyens à rampes 211 ; la vis sans fin 213 est amenée à coopérer avec la denture 218 dans les conditions qui seront décrites ci-après.

Ici, les dents 221 sont taillées à la périphérie externe du filet de la vis sans fin 213. Cette disposition, mieux visible sur les figures 42 et 43, est économique et simple.

L'axe 222 est porté à rotation par un support 212, mieux visible sur les figures 41 et 42, en tôle découpée et pliée, en forme générale de L ayant deux ailes 223, 224 dont l'une, 223, est destinée à supporter l'axe 222 et dont l'autre, 224, est destinée à la fixation du support 212 sur le couvercle 202 ; à cet effet, l'aile 223 porte un trou circulaire 225 adapté à recevoir l'extrémité de l'axe 222, ici filetée pour recevoir un écrou de fixation. Selon une variante. non représentée, l'aile 223 est munie d'un taraudage qui reçoit l'extrémité filetée de l'axe 222, ceci permettant de supprimer l'écrou.

Lorsque le support 212 est monté sur le couvercle 202, l'aile 224 est fixée sur le fond du couvercle 202 tandis que l'aile 223 traverse le diaphragme 203 entre deux de ses doigts qui, si nécessaire, peuvent écartés circonférentiellement plus que ne sont deux à deux les autres doigts.

Le support 212 est adapté à recevoir un organe élastique 272, ici métallique et de plus faible épaisseur que le support, mieux visible sur la figure 44 ; l'organe élastique 272 est en forme générale de cavalier et comprend un corps plan 273 portant à chacune de ses extrémités un bras 274 muni d'un trou 275 adapté à recevoir l'axe 222 ; les deux bras 274 sont parallèles et s'étendent du même côté et globalement perpendiculairement par rapport au corps 273. Sur l'un de ses bords longitudinaux, le corps 273 se prolonge, entre les bras 274, selon une extension 284 qui comprend une première partie 284A dans le prolongement du corps 273, une deuxième partie 284B dirigée dans le sens opposé à celui des bras 274 en faisant un angle aigu avec le corps 273, une troisième partie 284C formant un U avec la deuxième partie 284B et s'étendant parallèlement à celle-ci, et une quatrième partie 284D dirigée vers le corps 273 en étant parallèle à celui-ci, à un niveau légèrement supérieur en sorte qu'elle s'étend entre les bras 274 ; cette quatrième partie 284D reçoit, par exemple par rivetage, une plaquette en forme de T dont le pied 235 constitue une languette de commande 235 ; les deux bras du T traversent chacun une échancrure 274A ménagée dans chacun des bras 274 en sorte que la course de la languette de commande 235, parallèlement au corps 273, est limitée, au moins en éloignement du corps 273 ; sur son bord longitudinal opposé à celui où se situe l'extension 284, le corps 273 porte un cliquet anti-retour 236 constitué ici de deux lames 236A, 236B de longueurs légèrement différentes s'étendant globalement perpendiculairement au corps 273 du même côté, par rapport à celui-ci, que celui où s'étendent les bras 274 ; l'arête intérieure de la languette de commande 235 et l'extrémité libre des lames 236A et 236B sont à distance l'une de l'autre et positionnées en sorte que, lorsque l'organe élastique 272 et la roue à rochet 220 sont montés dans le support 212, le cliquet anti-retour 236 et la languette de commande 235 coopèrent chacun élastiquement avec un pied de dent de la roue à rochet 220. Le bras 274, de l'organe élastique 272, en appui sur l'aile 223 du support 212, présente un trou 253, figure 44, destiné à coopérer avec un téton 254, figure 42, prévu sur la face interne de ladite aile 223 pour positionnement angulaire de l'organe élastique 272 par rapport au support 212. Le téton 254 peut être remplacé par une goupille ou toute autre protubérance.

L'axe 222 porte une collerette 244 au voisinage de son extrémité non filetée ; autour de l'axe 222 est placé un ressort hélicoïdal 240 constituant le moyen élastique de rattrapage, comme décrit ci-dessous ; ici, le ressort 240 est enroulé autour de l'axe 222 en étant placé dans un logement 251 prévu à l'intérieur de la roue à rochet 220 (ou vis sans fin 213) ; la roue à rochet 220 (ou vis sans fin 213) est centrée par rapport à l'axe 222, d'un côté, en portant sur la collerette 244 dudit axe et, de l'autre côté, grâce à un redent circulaire intérieur 252 qu'elle présente ; le ressort 240 est ainsi placé axialement entre ledit redent 252 et la collerette 244 de l'axe 222 ; la roue à rochet 220 est au droit du cliquet anti-retour 236 qui, par coopération avec les dents 221 inclinées de la roue à rochet 220, empêche de tourner la roue à rochet 220, donc la vis sans fin 213, dans le sens contraire à celui des aiguilles d'une montre, par rapport à la figure 40.

Le support 212, portant la roue à rochet 220, la vis sans fin 213 et le ressort hélicoïdal 240, étant solidaire du couvercle 202, le diaphragme 203 se déplace par rapport à lui lors des opérations de débrayage et de ré-embrayage ; le diaphragme 203 est adapté par l'un de ses doigts, ici le doigt 250, à coopérer avec la languette de commande 235 de l'organe élastique 272 ; on comprendra que, grâce à cette disposition, lors du basculement du diaphragme 203 lors des opérations d'embrayage, la languette de commande 235 se déplace de la droite vers la gauche, par rapport à la figure 40, et, par coopération avec les dents 221 de la roue à rochet 220, est amenée à faire tourner la roue à rochet 220 dans le sens horaire ; lorsque le doigt 250 du diaphragme bascule vers la droite lors du débrayage, l'élasticité de l'organe élastique 272 et l'inclinaison des dents 221 font que la languette de commande 235 se déplace vers la droite en montant sur les dents 221 qui sont maintenues fixes en rotation par le cliquet anti-retour 236 et/ou les frottements internes.

Le dispositif de rattrapage d'usure qui vient d'être décrit fonctionne comme suit, sachant que le système denture 218 - vis sans fin 213 est irréversible, la vis 213 pouvant entraîner la denture 218 et pas l'inverse.

La figure 40 représente l'embrayage engagé, les garnitures du disque de friction étant à l'état neuf et serrées entre le plateau de réaction, non représenté, et le plateau de pression 201. Dans cette position, la languette de commande 235 et le cliquet anti-retour 236 ont leur extrémité au pied d'une dent de la roue à rochet 220.

Lorsque l'embrayage est débrayé, l'extrémité des doigts du diaphragme 203 est sollicitée dans le sens de la flèche F vers le fond du couvercle 202 ; dans son déplacement, le doigt 250 libère progressivement la languette de commande 235 dont l'extrémité suit la rampe inclinée constituée par la dent dans le pied de laquelle elle se trouvait dans l'étape précédente, les dents 221 de la roue à rochet 220 étant réalisées en sorte que, lors de cette course de débrayage garnitures neuves, l'extrémité de la languette de commande 235 ne saute pas une dent, le cliquet anti-retour 236 maintenant la roue à rochet 220 ; ceci est obtenu par la venue en butée de la languette 235 contre le bord des échancrures 274A des ailes 274 du support 272.

Lorsque les garnitures s'usent, comme on le sait le plateau de pression 201, toujours soumis à l'effort axial du diaphragme 203, se rapproche du plateau de réaction qui est fixe axialement comme le couvercle 202 ; le doigt 250 du diaphragme 203 se rapproche donc du plateau de réaction, donc de l'extrémité ouverte du couvercle 202, en entraînant dans son mouvement la languette de commande 235 ; la roue à rochet 220 tourne autour de son axe dans le sens horaire, sens pour lequel le cliquet anti-retour 236 n'assure pas sa fonction mais peut sauter d'une dent à l'autre ; cet entraînement en rotation de la roue à rochet 220 conduit la vis sans fin 213 à tourner également sur son axe ; les moyens de rampes 211 étant immobilisés par rapport au couvercle 203 sous l'effet de la charge du diaphragme 203, la vis sans fin 213 qui engrène avec la denture 218 des moyens de rampes 211 se visse en quelque sorte sur cette denture 218 en comprimant le ressort hélicoïdal 240, le sens du filet de la vis sans fin 213 étant prévu en sorte qu'il en soit ainsi.

Lors de l'opération de débrayage qui suit la phase d'usure qui vient d'être décrite, le plateau de pression 201 libère les garnitures en s'éloignant d'elles sous l'action des languettes tangentielles 209 qui ramènent vers le fond du couvercle 202 le plateau de pression 201 ainsi que les moyens à rampes 211 en contact avec le diaphragme 203 par leurs zones d'appui 214 et avec les plots 204 du plateau de pression 201 par leurs rampes 215. Le ressort hélicoïdal 240 sollicite la vis sans fin 213 vers l'aile 223 du support 212, dont elle s'est éloignée en phases d'usure, c'est-à-dire de la droite vers la gauche par rapport aux figures 41 et 42 ; la charge du diaphragme 203 n'étant plus appliquée sur les moyens à rampes 211, le seul effort à vaincre pour pouvoir faire tourner ces moyens à rampes 211 par rapport au plateau de pression 201 est l'effort de rappel des languettes tangentielles 209 ; si la charge du ressort hélicoïdal 240 est suffisante pour vaincre cet effort, alors le ressort 240 déplace la vis sans fin 213 qui est empêchée de tourner sur elle-même par la pression du cliquet anti-retour 236 et qui entraînera la denture 218 : en tournant sur elles-mêmes, les rampes 215 des moyens à rampes 211, par coopération avec les plots 204 du plateau de pression 201, éloigneront le plateau de pression 201 du fond du couvercle 202, augmentant ainsi la distance axiale entre la face de travail du plateau de pression 201 et les zones d'appui 214 des moyens à rampes 211, rattrapant ainsi au moins en partie le jeu dû à l'usure des garnitures. La charge du ressort hélicoïdal 240 étant fonction de la quantité dont il aura été comprimé par la vis sans fin 213 durant les phases d'usure, on voit que plusieurs opérations d'embrayage et de débrayage peuvent être nécessaires avant que le dispositif de rattrapage de jeu n'entre en phase de rattrapage proprement dite, ceci étant fonction du dimensionnement relatif des pièces concernées ; à titre d'exemple, celles-ci peuvent être réalisées de telle sorte que cette phase de rattrapage proprement dite n'intervienne la première fois qu'après une usure correspondant à trois dixièmes de millimètres.

Si l'usure a été suffisante pour que la roue à rochet 220 ait tourné suffisamment pour qu'au retour la languette 235 saute une dent, lors de l'opération d'embrayage, la languette 235, poussée par le doigt 250, fait tourner la roue à rochet 220 et les moyens à rampes 211, non encore serrés par le diaphragme 203, tournent et rattrapent l'usure ; en fin d'opération de rattrapage, le diaphragme, la roue à rochet 220, le cliquet anti-retour 236 et la languette de commande 235 retrouvent leur position qu'ils occupaient à la figure 40.

La vis sans fin 213 et la roue à rochet 220 étant taillées dans une même pièce, comme on le voit, le support 212 équipé de cette même pièce, de l'organe élastique 272, du ressort 240 et de l'axe 222 constitue un sous-ensemble prêt à être installé sur le couvercle 202.

Selon la variante qui vient d'être décrite, le ressort 240 est enroulé autour de l'axe 222 en étant logé à l'intérieur de la pièce unique compacte axialement formant roue à rochet 220 et vis sans fin 213 ; selon la variante de la figure 45, le ressort est à l'extérieur de ladite pièce unique en étant réalisé sous forme d'un étrier élastique 340 chevauchant ladite pièce unique.

Il est possible de réaliser cette fonction élastique en supportant ladite pièce élastiquement par rapport au couvercle ; ainsi, comme le montrent les figures 46 et 47, des lamelles élastiques liées, d'un côté, à l'axe autour duquel est montée à rotation ladite pièce unique et, de l'autre côté, au couvercle 202 peuvent être utilisées pour ce faire : selon la figure 46, les lamelles 440 sont droites et liées au couvercle sur une patte rabattue de celui-ci ; selon la figure 47, ce sont les lamelles 540 qui présentent une patte rabattue pour liaison au couvercle.

Comme le montrent les figures 41, 42, 46 et 47, l'axe 222 est incliné, par rapport à un plan perpendiculaire à l'axe de l'embrayage, d'un angle égal à celui du filet de la vis sans fin 213 ; grâce à cette disposition, les dents constituant la denture 218 sont des dents droites, ce qui facilite la fabrication des moyens à rampes 214.

Comme cela a été décrit précédemment, lors de l'opération de débrayage qui suit une phase d'usure, le plateau de pression 201 libère les garnitures en s'éloignant d'elles sous l'action des languettes tangentielles 209 qui ramènent vers le fond du couvercle 202 le plateau de pression 201 et les moyens à rampes 211 ; pour être sûr que le ressort hélicoïdal 240 puisse actionner les moyens à rampes 211 sans être gêner par l'effort axial de rappel dû aux languettes tangentielles 209, il peut être avantageux de limiter la course du plateau de pression 201 lors des opérations de débrayage.

La variante de la figure 48 présente une disposition le permettant ; selon cette variante, le plateau de pression 201 porte un pion 301 axial, pouvant être par exemple un prolongement d'un rivet de fixation des languettes 209 au plateau 201 ; le pion 301 porte deux collerettes 302, 303 définissant des butées axiales.

Une bague 305 entoure le pion 301 et sa longueur axiale est inférieure à la longueur qui sépare axialement les deux collerettes 302 et 303, la différence desdites longueurs définissant un jeu axial.

La bague 305 est emmanchée dans un trou du bord du couvercle 202 dont elle est solidaire par friction, les butées axiales 302 et 303 étant disposées de part et d'autre dudit bord ; ledit jeu axial définit ainsi la course de rappel du plateau 201 par les languettes 209 ; ce jeu axial est constant quelle que soit l'usure des garnitures ; en effet, en cas d'usure de celles-ci, la bague 305 est déplacée par l'effort du diaphragme qui est supérieur à l'effort de friction entre la bague 305 et le couvercle 202, lequel effort étant supérieur à l'effort axial dû aux languettes 209.

Dans tout ce qui précède, les moyens anti-retour sont constitués par un cliquet qui coopère avec la roue à rochet ; en variante, ce sont des moyens de frottement, comme des patins de frottement par exemple.

De préférence un seul dispositif de rattrapage d'usure est prévu.

Ainsi qu'on l'aura compris à la lumière de la description et des dessins le dispositif de rattrapage d'usure est peu sensible aux vibrations, notamment à celles dues aux vibrations axiales du vilebrequin du moteur du véhicule du fait de l'action de la vis sans fin sur une denture solidaire des moyens de rampe.

Le dispositif de rattrapage d'usure est peu sensible aux effets de la force centrifuge et aux déformations thermiques.

Il est moins sensible aux phénomènes de corrosion.

En effet l'irréversibilité de l'action de la vis sans fin sur une denture solidaire des moyens à rampes en liaison avec les moyens anti-retour empêche un fonctionnement intempestif du dispositif de rattrapage d'usure, compte tenu des vibrations, alors qu'il n'y a pas d'usure. Ainsi le plateau de pression ne peut pas entraîner la vis sans fin par l'intermédiaire des moyens de rampes.

La présence du support porté par le couvercle et portant la pièce de commande et les moyens anti-retour, en combinaison avec le centrage les moyens à rampes par le plateau de pression, permet au dispositif de rattrapage d'usure de bien résister aux phénomènes de la force centrifuge.

L'ensemble roue à rochet - vis sans fin - ressort hélicoïdal est peu encombrant et ne gêne pas la ventilation de l'embrayage. Cette ventilation est favorisée par la présence des ouvertures dans les moyens à rampes, ainsi que par la présence des plots.

L'action des moyens élastiques à action axiale sur la pièce de commande coopérant avec la roue à rochet permet de décoincer le dispositif de rattrapage d'usure.

Les moyens élastiques à action axiale peuvent avoir une autre forme comme décrit par exemple dans les FR-A-2 753 758, FR-A-2 753 756, FR-A-2 761 738 et FR-A- 2 761 739.

Ainsi en se reportant aux figures 4 5 et 3,4 respectivement des documents FR-A-2 753 758 et FR-A-2 761 738 on voit qu'une rondelle Belleville est montée en série avec le diaphragme pour constituer les moyens élastiques débrayeurs à action axiale de l'embrayage, le diaphragme étant en contact avec la languette de commande directement ou indirectement, par l'intermédiaire de moyens de transmission d'efforts intervenant entre la rondelle Belleville et le diaphragme.

La rondelle Belleville est une rondelle d'assistance du type positive.

Cette rondelle d'assistance est par exemple dimensionnée en fonction des moyens de progressivité montés au sein du disque de friction.

Bien entendu la rondelle d'assistance peut être montée en parallèle avec le diaphragme, par exemple en agissant entre le couvercle et l'extrémité interne des doigts du diaphragme, tel que décrit dans le document FR-A 2 728 638.

## Revendications

1. Embrayage à friction, comportant un plateau de réaction destiné à être calé en rotation sur un arbre menant, un disque de friction, portant à sa périphérie externe des garnitures de friction, destiné à être calé en rotation sur un arbre mené, un plateau de pression (1, 51, 201), un couvercle (2, 52, 202) fixé sur le plateau de réaction, des moyens-élastiques à action axiale (3, 53, 203) agissant entre, d'une part, le couvercle (2,- 52, 202) et, d'autre part, le plateau de pression (1, 51, 201) par l'intermédiaire de moyens d'appui (14, 214), le plateau de pression (1, 51, 201) étant solidaire en rotation du couvercle (2, 52, 202) tout en pouvant se déplacer axialement par rapport à lui et étant soumis à l'action de moyens élastiques de rappel (9, 209) rappelant le plateau de pression (1, 51, 201) axialement vers le couvercle (2, 52, 202), ledit embrayage comportant également un dispositif de rattrapage d'usure comprenant des moyens à rampes (11, 54, 211) disposées circonférentiellement, placés axialement entre les moyens d'appui (14, 214) et le plateau de pression (1, 51, 201) et adaptés à être entraînés en rotation grâce à une denture (18, 59, 218) qu'ils portent à leur périphérie et avec laquelle coopère une vis sans fin (13, 63, 213) disposée tangentiellement, des moyens d'entraînement en rotation (20, 60, 220) de la vis sans fin (13, 63, 213) étant prévus, rendus opérationnels par l'usure des garnitures de friction lorsque l'embrayage est embrayé, ainsi que des moyens anti-retour (36, 78, 98, 236) empêchant la vis sans fin (13, 63, 213) de tourner dans le sens contraire de celui dans lequel elle est entraînée en rotation par les moyens d'entraînement en rotation (20, 60, 220) lorsqu'ils sont opérationnels, la vis sans fin (13, 63, 213), les moyens anti-retour (36, 78, 98, 236) et les moyens d'entraînement en rotation (20, 60, 220) de la vis sans fin (13, 63, 213) étant portés par un support (12, 62, 92, 212) solidaire du couvercle (2, 52, 202), et les moyens élastiques à action axiale (3, 53, 203) étant constitués par un diaphragme, qui commande la rotation de la vis sans fin (13, 63, 213) par l'intermédiaire d'une pièce de commande (35, 76, 101, 121, 235) appartenant auxdits moyens d'entrainement en rotation (20, 60, 220) de la vis sans fin (13, 63, 213) **caractérisé par le fait que** la course de la pièce de commande (35, 76, 101, 121, 235) lors de l'opération de débrayage est limitée par une butée dite de contrôle (27-28, 71, 117, 274A)

2. Embrayage à friction selon la revendication 1, **caractérisé par le fait que** les moyens à rampes (11, 54, 211) sont constitués d'un anneau présentant des rampes (15, 56, 215) inclinées et réparties circonférentiellement et **par le fait que** les moyens à rampes (11) présentent un rebord axial (16) muni d'ouvertures (16A) de ventilation.

3. Embrayage à friction selon la revendication 2, **caractérisé par le fait que** le plateau de pression (1,,51, 201) présente des plots (4, 57, 204) destinés à coopérer avec les rampes (15, 56, 215) des moyens à rampes (11, 54, 211) et **par le fait que** ledit anneau présente également des zones d'appui (14, 214) constituées par l'arête supérieure arrondie d'emboutis disposés en arcs de cercle centrés sur l'axe de l'embrayage et placés radialement à l'extérieur par rapport aux rampes (15, 56, 215).

4. Embrayage à friction selon la revendication 1, **caractérisé par le fait que** la vis sans fin (13, 63, 213) est montée à coulissement selon son axe en étant soumise à l'action d'un moyen élastique dit de rattrapage (40, 86, 240, 340, 440, 540) et, lorsqu'elle est déplacée selon son axe, elle entraîne en rotation circonférentielle lesdits moyens à rampes (11, 54, 211) et **par le fait que** le moyen élastique de rattrapage (40; 86, 240) est un ressort hélicoïdal entourant un axe (22, 67, 222) qui porte la vis sans fin (13, 63, 213).

5. Embrayage à friction selon la revendication 4, **caractérisé par le fait que** la charge du moyen élastique de rattrapage (40, 86, 240, 340, 440, 540) croît avec l'usure des garnitures de friction et ledit déplacement axial est obtenu par action du moyen élastique de rattrapage (40, 86, 240, 340, 440, 540) lorsque sa charge est suffisamment élevée pour surmonter l'effort de frottement dû à l'effort axial provenant des moyens élastiques de rappel (9, 209) auxquels sont soumis lesdits moyens à rampes (11, 54, 211), l'embrayage étant débrayé.

6. Embrayage à friction selon la revendication 4, **caractérisé par le fait que** la course du plateau de pression (201) est limitée dans le sens du débrayage pour libérer les moyens à rampes (211) de l'effort axial provenant des moyens élastiques de rappel (209).

7. Embrayage à friction selon la revendication 4, **caractérisé par le fait que** les moyens d'entraînement en rotation (20, 60, 220) de la vis sans fin (13, 63, 213) sont constitués par une roue à rochet solidaire en rotation de la vis sans fin (13, 63, 213).

8. Embrayage à friction selon la revendication 7, **caractérisé par le fait que** l'axe (22, 67, 222) portant la vis sans fin (13, 63, 213) et le ressort hélicoïdal (40, 86, 240) est supporté par le support (12, 62, 92, 212).

9. Embrayage à friction selon la revendication 8, **caractérisé par le fait que** l'embrayage est du type poussé et **par le fait que** le support (12) est en forme de U ayant une âme (19) et deux ailes (23, 24) destinées à supporter l'axe (22) et les ailes (23, 24) du support (12) se prolongent selon des bras (27, 28) en forme de L s'étendant l'un vers l'autre perpendiculairement à l'âme (19) et se terminant chacun par une extrémité en forme de C sertie sur le bord d'une ouverture transversale (6) du couvercle (2) prévue dans une excroissance radiale (5) définissant un logement pour le dispositif de rattrapage de jeu.

10. Embrayage à friction selon la revendication 9, **caractérisé par le fait que** la pièce de commande est une languette de commande (35), tandis que les moyens anti-retour sont constitués par un cliquet (36) qui coopère avec la roue à rochet (20), **par le fait que** le support (12) est adapté à recevoir un organe élastique (31), en forme générale de crosse dont chaque extrémité est munie d'un retour vers l'intérieur, et la partie de plus grande longueur (32) de la crosse croit en largeur vers son ,extrémité se terminant selon un retour (34) qui porte en bout une languette de commande (35), la partie de plus petite longueur (33) de la crosse ayant son retour (36) formant cliquet anti-retour qui s'étend globalement parallèlement à la languette de commande (35) en étant à distance de celle-ci en sorte que, lorsque l'organe élastique (31) et la roue à rochet (20) sont montés dans le support (12), le cliquet anti-retour (36) et la languette de commande (35) coopèrent chacun avec un pied de dent.

11. Embrayage à friction selon la revendication 10, **caractérisé par le fait que**, pour son montage dans le support (12), l'organe élastique (31) porte latéralement des bras en équerre (37, 38) disposés de part et d'autre de la partie élastique en forme de crosse, orthogonalement par rapport à celle-ci, et l'extrémité libre des bras (37; 38) en équerre porte des trous (39) pour l'axe (22).

12. Embrayage à friction selon la revendication 10, **caractérisé par le fait que** le support (12) équipé de la vis sans fin (13), de la roue à rochet (20), de l'organe élastique (31), du ressort (40) et de l'axe (22) constitue un sous-ensemble prêt à être installé dans le couvercle (2).

13. Embrayage à friction selon la revendication 8, **caractérisé par le fait que** le diaphragme (3) porte à sa périphérie un appendice radial dit actionneur (45) s'étendant radialement à l'extérieur de la partie rondelle Belleville du diaphragme (3).

14. Embrayage à friction selon la revendication 11, **caractérisé par le fait que** la partie de grande longueur (32) de la crosse de l'organe élastique (31) vient en butée contre les bras (27, 28) du support (12).

15. Embrayage à friction selon la revendication 13, **caractérisé par le fait que** le support (62) est en forme de U, ayant une âme (64) et deux ailes (65, 66), chacune portant un trou (61) adapté à recevoir l'axe (67) du dispositif, l'âme (64) portant latéralement une patte (68) à l'équerre dirigée vers l'extérieur destinée à être fixée sur le rebord externe du couvercle (52), et les ailes (65, 66) du support (62) présentent, du côté opposé à celui où est située la patte (68), un prolongement axial dont l'extrémité est pliée vers l'extérieur pour constituer une patte de fixation (69) parallèle à la patte (68) ci-dessus et destinée à être fixée au fond du couvercle (52).

16. Embrayage à friction selon la revendication 15, **caractérisé par le fait que** la pièce de commande est une languette de commande (76) et **par le fait que** l'organe élastique (72) est en forme de cavalier et comprend un corps (73) plan allongé portant à chacune de ses extrémités un bras (74) muni d'un trou (75) adapté à recevoir l'axe (67), et, sur l'un de ses bords longitudinaux, le corps (73) se prolonge selon une extension en oblique (84) du même côté que celui où sont placés les bras (74), des échancrures (82, 83) ménagées dans le corps (73) limitant l'extension (84) par rapport aux extrémités du corps (73) portant les bras (74), l'extrémité libre de l'extension (84) étant munie d'un retour (85) qui se prolonge selon une languette de commande (76) s'étendant en direction du corps (73) en étant globalement parallèle à celui-ci.

17. Embrayage à friction selon la revendication 15, **caractérisé par le fait que** l'organe élastique comprend deux pièces distinctes, une première pièce, pour la fonction anti-retour, étant un étrier (93) en forme de U dont les deux ailes (94) portent des trous (95) pour supporter l'axe (67), l'âme (96) de cet étrier (93) étant, sur l'un de ses côtés, au voisinage de sa partie médiane, découpée en au moins deux lames (98A-D) qui s'étendent dans une direction parallèle à celle des ailes (94) et se prolongent selon des retours en équerre dirigés du même côté que les ailes (94) par rapport à l'âme (96) globalement perpendiculairement à ladite âme (96), lesdits retours ayant des longueurs légèrement différentes et les lames (98A-D) constituant un cliquet anti-retour (98) destiné à coopérer avec la roue à rochet (60).

18. Embrayage à friction selon la revendication 17, **caractérisé par le fait que** la seconde pièce, pour la fonction commande de la roue à rochet (63), est un ressort filiforme (107) associé à un doigt (101) porté par un manchon cylindrique (102) emmanché sur un arbre (103), le manchon (102) et son doigt (10 1 ) étant solidarisés en rotation à l'arbre (103) par une goupille (105) traversant diamétralement le manchon (102) et l'arbre (103) en dépassant d'un côté du manchon (102) pour réaliser un toc d'appui pour le fond (108) d'une boucle ouverte (106) du ressort filiforme (107) conformé en une sorte de patère, ledit ressort filiforme (107) étant adapté à soumettre le doigt de commande (101) à un couple de torsion appliquant l'extrémité du doigt (101) sur la roue à rochet (63).

19. Embrayage à friction selon la revendication 18, **caractérisé par le fait que** les dents (221) de la roue à rochet (220) sont taillées à la périphérie externe du filet de la vis sans fin (213).

20. Embrayage à friction selon la revendication 19, **caractérisé par le fait que** l'embrayage est du type tiré, et **par le fait que** le support (212) est en forme générale de L ayant deux ailes (223, 224) dont l'une (223) est destinée à supporter l'axe (222) et dont l'autre (224) est destinée à la fixation du support (212) sur le couvercle (202), l'aile (223) supportant l'axe traversant le diaphragme (203) entre deux de ses doigts.

21. Embrayage à friction selon la revendication 20, **caractérisé par le fait que** la pièce de commande est une languette de commande (235) et **par le fait que** l'organe élastique (272) est en forme générale de cavalier et comprend un corps (273) plan portant à chacune de ses extrémités un bras (274) muni d'un trou (275) adapté à recevoir l'axe (222), les deux bras (274) étant parallèles et s'étendant du même côté et globalement perpendiculairement par rapport au corps (273), et, sur l'un de ses bords longitudinaux, le corps (273) se prolonge selon une extension (284) qui comprend une première partie (284A) dans le prolongement du corps (273), une deuxième partie (284B) dirigée dans le sens opposé à celui des bras (274) en faisant un angle aigu avec le corps (273), une troisième partie (284C) formant un U avec la deuxième partie (284B) et s'étendant parallèlement à celle-ci, et une quatrième partie (284D) dirigée vers le corps (273) en étant parallèle à celui-ci, à un niveau légèrement supérieur en sorte qu'elle s'étend entre les bras (274), cette quatrième partie (284D) constituant directement ou non une languette de commande (235).

22. Embrayage à friction selon la revendication 21, **caractérisé par le fait que** sur son bord longitudinal opposé à celui où se situe l'extension (284), le corps (273) porte un cliquet anti-retour (236) constitué d'au moins deux lames (236A, 236B) de longueurs différentes.

23. Embrayage à friction selon la revendication 1, **caractérisé par le fait que** le moyen élastique de rattrapage est à l'extérieur de la vis sans fin (213) en étant réalisé sous forme d'un étrier élastique (340) chevauchant ladite vis (213).

24. Embrayage à friction selon la revendication 1, **caractérisé par le fait que** l'axe (222) est incliné, par rapport à un plan perpendiculaire à l'axe de l'embrayage, d'un angle égal à celui du filet de la vis sans fin (212).

## Patentansprüche

1. Reibungskupplung, umfassend eine Gegenanpreßplatte, die zur drehfesten Anbringung an einer treibenden Welle bestimmt ist, eine an ihrem äußeren Umfang Reibbeläge tragende Kupplungsscheibe, die zur drehfesten Anbringung an einer getriebenen Welle bestimmt ist, eine Druckplatte (1, 51, 201), einen an der Gegenanpreßplatte befestigten Deckel (2, 52, 202), axial wirksame elastische Mittel (3, 53, 203), die zwischen dem Deckel (2, 52, 202) einerseits und der Druckplatte (1, 51, 201) andererseits über Auflagemittel (14, 214) wirken, wobei die Druckplatte (1, 51, 201) drehfest mit dem Deckel (2, 52, 202) verbunden ist, während sie sich axial im Verhältnis zu diesem verschieben kann und der Wirkung von elastischen Rückstellmitteln (9, 209) ausgesetzt ist, die die Druckplatte (1, 51, 201) axial zum Deckel (2, 52, 202) hin zurückstellen, wobei die Kupplung außerdem eine Verschleißnachstellvorrichtung mit umfangsmäßig angeordneten Rampenmitteln (11, 54, 211) umfaßt, die axial zwischen den Auflagemitteln (14, 214) und der Druckplatte (1, 51, 201) angebracht sind und mittels einer Zahnung (18, 59, 218) drehend angetrieben werden können, die sie an ihrem Umfang tragen und mit der eine tangential angeordnete Schnecke (13, 63, 213) zusammenwirkt, wobei Drehantriebsmittel (20, 60, 220) für die Schnecke (13, 63, 213), die durch den Verschleiß der Reibbeläge betriebsbereit werden, wenn die Kupplung eingerückt ist, sowie Rückdrehsicherungsmittel (36, 78, 98, 236) vorgesehen sind, welche die Schnecke (13, 63, 213) daran hindern, sich in der Gegenrichtung zu der Richtung zu drehen, in der sie durch die Drehantriebsmittel (20, 60, 220), wenn sie betriebsbereit sind, drehend angetrieben wird, wobei die Schnecke (13, 63, 213), die Rückdrehsicherungsmittel (36, 78, 98, 236) und die Drehantriebsmittel (20, 60, 220) der Schnecke (13, 63, 213) auf einem fest mit dem Deckel (2, 52, 202) verbundenen Träger (12, 62, 92, 212) gelagert sind, und wobei die axial wirksamen elastischen Einrückmittel (3, 53, 203) aus einer Membranfeder bestehen, welche die Drehung der Schnecke (13, 63, 213) über ein Betätigungselement (35, 76, 101, 121, 235) bewirkt, das zu den besagten Drehantriebsmitteln (20, 60, 220) der Schnecke (13, 63, 213) gehört, **dadurch gekennzeichnet, daß** der Verstellweg des Betätigungselements (35, 76, 101, 121, 235) beim Ausrückvorgang durch einen als Kontrollanschlag bezeichneten Anschlag (27-28, 71, 117, 274A) begrenzt wird.

2. Reibungskupplung nach Anspruch 1, **dadurch gekennzeichnet, daß** die Rampenmittel (11, 54, 211) aus einem Ring mit Rampen (15, 56, 215) bestehen, die geneigt und umfangsmäßig verteilt sind, und daß die Rampenmittel (11) eine axiale Randleiste (16) mit Belüftungsöffnungen (16A) aufweisen.

3. Reibungskupplung nach Anspruch 2, **dadurch gekennzeichnet, daß** die Druckplatte (1, 51, 201) Sockel (4, 57, 204) aufweist, die dazu bestimmt sind, mit den Rampen (15, 56, 215) der Rampenmittel (11, 54, 211) zusammenzuwirken, und daß der besagte Ring außerdem Auflagebereiche (14, 214) aufweist, die aus der abgerundeten Oberkante von Ausbuchtungen bestehen, die in Form von auf die Kupplungsachse zentrierten Kreisbögen angeordnet und, bezogen auf die Rampen (15, 56, 215), radial außen angeordnet sind.

4. Reibungskupplung nach Anspruch 1, **dadurch gekennzeichnet, daß** die Schnecke (13, 63, 213) entlang ihrer Achse gleitend verschiebbar gelagert und der Einwirkung eines als Nachstellmittel bezeichneten elastischen Mittels (40, 86, 240, 340, 440, 540) ausgesetzt ist und, wenn sie entlang ihrer Achse verschoben wird, die besagten Rampenmittel (11, 54, 211) in einer Umfangsdrehung antreibt, und daß das elastische Nachstellmittel (40; 86, 240) eine Schraubenfeder ist, die eine Achse (22, 67, 222) umgibt, die die Schnecke (13, 63, 213) trägt.

5. Reibungskupplung nach Anspruch 4, **dadurch gekennzeichnet, daß** die Belastung des elastischen Nachstellmittels (40, 86, 240, 340, 440, 540) mit zunehmendem Verschleiß der besagten Reibbeläge steigt und die besagte axiale Verschiebung durch die Einwirkung des elastischen Nachstellmittels (40, 86, 240, 340, 440, 540) herbeigeführt wird, wenn seine Belastung ausreichend groß ist, um die Reibbeanspruchung zu überwinden, die durch die axiale Beanspruchung bedingt ist, die von den elastischen Rückstellmitteln (9, 209) stammt, denen die besagten Rampenmittel (11, 54, 211) bei ausgerückter Kupplung ausgesetzt sind.

6. Reibungskupplung nach Anspruch 4, **dadurch gekennzeichnet, daß** der Verstellweg der Druckplatte (201) in Auskuppelrichtung begrenzt ist, um die Rampenmittel (211) von der axialen Beanspruchung zu entlasten, die von den elastischen Rückstellmitteln (209) stammt.

7. Reibungskupplung nach Anspruch 4, **dadurch gekennzeichnet, daß** die Drehantriebsmittel (20, 60, 220) der Schnecke (13, 63, 213) aus einem drehfest mit der Schnecke (13, 63, 213) verbundenen Sperrzahnrad bestehen.

8. Reibungskupplung nach Anspruch 7, **dadurch gekennzeichnet, daß** die Achse (22, 67, 222), die die Schnecke 13, 63, 213) und die Schraubenfeder (40, 86, 240) trägt, durch den Träger (12, 62, 92, 212) gelagert ist.

9. Reibungskupplung nach Anspruch 8, **dadurch gekennzeichnet, daß** die Kupplung in gedrückter Konstruktion ausgeführt ist und daß der Träger (12) in U-Form mit einem Steg (19) und zwei Schenkeln (23, 24) gestaltet ist, die dazu bestimmt sind, die Achse (22) zu lagern, und die Schenkel (23, 24) des Trägers (12)) entlang L-förmigen Armen (27, 28) verlängert sind, die sich senkrecht zum Steg (19) zueinander hin erstrecken und jeweils in einem C-förmigen Ende enden, das am Rand einer Queröffnung (6) des Deckels (2) aufgefalzt ist, die in einer radialen Ausstülpung (5) vorgesehen ist, die eine Aufnahme für die Spielnachstellvorrichtung definiert.

10. Reibungskupplung nach Anspruch 9, **dadurch gekennzeichnet, daß** das Betätigungselement eine Betätigungszunge (35) ist, während die Rückdrehsicherungsmittel aus einer Sperrklinke (36) bestehen, die mit dem Sperrzahnrad (20) zusammenwirkt, daß der Träger (12) ein elastisches Organ (31) mit der allgemeinen Form eines Krummstücks aufnehmen kann, von dem jedes Ende mit einem Rücksprung nach innen versehen ist, wobei sich der mit größerer Länge ausgeführte Teil (32) des Krummstücks in der Breite zu seinem Ende hin vergrößert, das entlang einem Rücksprung (34) endet, der endseitig eine Betätigungszunge (35) trägt, wobei der mit kleinerer Länge ausgeführte Teil (33) des Krummstücks einen als Sperrklinke dienenden Rücksprung (36) aufweist, der sich insgesamt parallel zur Betätigungszunge (35) erstreckt und in einem Abstand von dieser verläuft, so daß, wenn das elastische Organ (31) und das Sperrzahnrad (20) im Träger (12) eingebaut sind, die Sperrklinke (36) und die Betätigungszunge (35) jeweils mit einem Zahnfuß zusammenwirken.

11. Reibungskupplung nach Anspruch 10, **dadurch gekennzeichnet, daß** das elastische Organ (31) für seinen Einbau im Träger (12) seitlich winkelförmige Arme (37, 38) trägt, die beiderseits des in Form eines Krummstücks ausgebildeten elastischen Teils, rechtwinklig im Verhältnis zu diesem, angeordnet sind, und das freie Ende der winkelförmigen Arme (37, 38) Löcher (39) für die Achse (22) enthält.

12. Reibungskupplung nach Anspruch 10, **dadurch gekennzeichnet, daß** der mit der Schnecke (13), dem Sperrzahnrad (20), dem elastischen Organ (31), der Feder (40) und der Achse (22) bestückte Träger (12) eine einbaufertige Untergruppe für den Einbau im Deckel (2) bildet.

13. Reibungskupplung nach Anspruch 8, **dadurch gekennzeichnet, daß** die Membranfeder (3) an ihrem Umfang einen als Stellglied bezeichneten radialen Fortsatz (45) trägt, der sich radial außerhalb des Tellerfederteils der Membranfeder (3) erstreckt.

14. Reibungskupplung nach Anspruch 11, **dadurch gekennzeichnet, daß** der mit größerer Länge ausgeführte Teil (32) des Krummstücks des elastischen Organs (31) an den Armen (27, 28) des Trägers (12) zum Anschlag kommt.

15. Reibungskupplung nach Anspruch 13, **dadurch gekennzeichnet, daß** der Träger (62) in U-Form mit einem Steg (64) und zwei Schenkeln (65, 66) ausgeführt ist, die jeweils ein Loch (61) enthalten, das die Achse (67) der Vorrichtung aufnehmen kann, wobei der Steg (64) seitlich einen nach außen gerichteten winkelförmigen Ansatz (68) trägt, der dazu bestimmt ist, an der äußeren Randleiste des Deckels (52) befestigt zu werden, während die Schenkel (65, 66) des Trägers (62) auf der Seite gegenüber derjenigen, auf der sich der Ansatz (68) befindet, eine axiale Verlängerung aufweisen, deren Ende nach außen umgebogen ist, um einen Befestigungsansatz (69) zu bilden, der parallel zum vorangehenden Befestigungsansatz (68) verläuft und dazu bestimmt ist, am Boden des Deckels (52) befestigt zu werden.

16. Reibungskupplung nach Anspruch 15, **dadurch gekennzeichnet, daß** das Betätigungselement eine Betätigungszunge (76) ist und daß das elastische Organ (72) in Form einer Klammer ausgeführt ist und einen langgestreckten ebenen Körper (73) umfaßt, der an jedem seiner Enden eine Arm (74) mit einem Loch (75) trägt, das die Achse (67) aufnehmen kann, wobei der Körper (73) an einem seiner Längsränder entlang einer schrägen Erweiterung (84) auf der gleichen Seite verlängert wird, auf der auch die Arme (74) angeordnet sind, wobei in den Körper (73) eingearbeitete Aussparungen (82, 83) die Erweiterung (84) im Verhältnis zu den Enden des Körpers (73), die die Arme (74) tragen, begrenzen, wobei das freie Ende der Erweiterung (84) mit einem Rücksprung (85) versehen ist, der sich entlang einer Betätigungszunge (76) verlängert, die sich in Richtung des Körpers (73) erstreckt, wobei sie insgesamt parallel zu diesem verläuft.

17. Reibungskupplung nach Anspruch 15, **dadurch gekennzeichnet, daß** das elastische Organ zwei verschiedene Teile umfaßt, wobei ein erstes Teil, für die Rückdrehsicherungsfunktion, ein Bügel (93) in U-Form ist, dessen zwei Schenkel (94) Löcher (95) enthalten, um die Achse (67) zu lagern, wobei der Steg (96) dieses Bügels (93) auf einer seiner Seiten, in der Nähe seines Mittelteils, in wenigstens zwei Leisten (98A-D) eingeschnitten ist, die sich in einer zur Richtung der Schenkel (94) parallelen Richtung erstrecken und entlang winkelförmigen Rücksprüngen verlängert werden, die zur gleichen Seite wie die Schenkel (94) im Verhältnis zum Steg (96) insgesamt senkrecht zu dem besagten Steg (96) gerichtet sind, wobei die Rücksprünge leicht unterschiedliche Längen aufweisen und die Leisten (98A-D) eine Sperrklinke (98) bilden, die dazu bestimmt ist, mit dem Sperrzahnrad (60) zusammenzuwirken.

18. Reibungskupplung nach Anspruch 17, **dadurch gekennzeichnet, daß** das zweite Teil, für die Betätigungsfunktion zur Betätigung des Sperrzahnrads (63), eine Drahtfeder (107) ist, die mit einem Finger (101) verbunden ist, der an einer auf einer Welle (103) aufgesteckten zylindrischen Muffe (102) angebracht ist, wobei die Muffe (102) und ihr Finger (101) mit der Welle (103) durch einen Stift (105) drehfest verbunden sind, der diametral durch die Muffe (102) und die Welle (103) hindurchgeht und auf einer Seite der Muffe (102) übersteht, um eine Auflagenase für den Boden (108) einer offenen Schlaufe (106) der Drahtfeder (107) zu bilden, die als eine Art Haken gestaltet ist, wobei die Drahtfeder (107) den Betätigungsfinger (101) einem Torsionsmoment aussetzen kann, um das Ende des Fingers (101) am Sperrzahnrad (63) anzudrücken.

19. Reibungskupplung nach Anspruch 18, **dadurch gekennzeichnet, daß** die Zähne (221) des Sperrzahnrads (220) am äußeren Umfang des Gewindes der Schnecke (213) herausgearbeitet sind.

20. Reibungskupplung nach Anspruch 19, **dadurch gekennzeichnet, daß** die Kupplung in gezogener Konstruktion ausgeführt ist und daß der Träger (212) die allgemeine Form eines L mit zwei Schenkeln (223, 224) aufweist, von denen einer (223) dazu bestimmt ist, die Achse (222) zu lagern, während der andere (224) zur Befestigung des Trägers (212) am Deckel (202) bestimmt ist, wobei der Schenkel (223), der die Achse trägt, durch die Membranfeder (203) zwischen zwei ihrer Finger hindurchgeht.

21. Reibungskupplung nach Anspruch 20, **dadurch gekennzeichnet, daß** das Betätigungselement eine Betätigungszunge (235) ist und daß das elastische Organ (272) die allgemeine Form einer Klammer aufweist und einen ebenen Körper (273) umfaßt, der an jedem seiner Enden einen Arm (274) mit einem Loch (275) enthält, das die Achse (222) aufnehmen kann, wobei die beiden Arme (274) parallel verlaufen und sich auf der gleichen Seite und insgesamt senkrecht im Verhältnis zum Körper (273) erstrecken, und der Körper (273) an einem seiner Längsränder entlang einer Erweiterung (284) verlängert wird, die einen ersten Teil (284A) in der Verlängerung des Körpers (273), einen zweiten Teil (284B), der in der zur Richtung der Arme (274) entgegengesetzten Richtung verläuft, wobei er einen spitzen Winkel mit dem Körper (273) bildet, einen dritten Teil (284C), der zusammen mit dem zweiten Teil (284B) ein U bildet und sich parallel zu diesem erstreckt, sowie einen vierten Teil (284D) umfaßt, der zum Körper (273) gerichtet ist und parallel zu diesem, an einer etwas höheren Stelle verläuft, so daß er sich zwischen den Armen (274) erstreckt, wobei dieser vierte Teil (284D) direkt oder indirekt eine Betätigungszunge (235) bildet.

22. Reibungskupplung nach Anspruch 21, **dadurch gekennzeichnet, daß** der Körper (273) an seinem Längsrand, der dem Längsrand mit der daran befindlichen Erweiterung (284) gegenüberliegt, eine Sperrklinke (236) trägt, die aus wenigstens zwei Leisten (236A, 236B) mit unterschiedlichen Längen besieht.

23. Reibungskupplung nach Anspruch 1, **dadurch gekennzeichnet, daß** sich das elastische Nachstellmittel außerhalb der Schnecke (213) befindet, wobei es in Form eines elastischen Bügels (340) ausgeführt ist, der die Schnecke (213) übergreift.

24. Reibungskupplung nach Anspruch 1, **dadurch gekennzeichnet, daß** die Achse (222) im Verhältnis zu einer zur Kupplungsachse senkrechten Ebene um einen Winkel geneigt ist, der gleich dem Winkel des Gewindes der Schnecke (213) ist.

## Claims

1. A friction clutch, comprising a reaction plate adapted to be mounted on a driving shaft for rotation therewith, a friction disc carrying friction liners at its outer periphery and adapted to be mounted on a driven shaft for rotation therewith, a pressure plate (1, 51, 201), a cover plate (2, 52, 202) fixed on the reaction plate, axially acting resilient means (3, 53, 203) working between the cover plate (2, 52, 202) on the one hand and the pressure plate (1, 51, 201) on the other through interposed abutment means (14, 214), the pressure plate (1, 51, 201) being fixed to the cover plate (2, 52, 202) for rotation with the latter while being displaceable axially with respect thereto and being subjected to the action of resilient return means (9, 209) which bias the pressure plate (1, 51, 201) axially towards the cover plate (2, 52, 202), the said clutch further including a wear compensating device comprising ramp means (11, 54, 211) disposed circumferentially, located axially between the abutment means (14, 214) and the pressure plate (1, 51, 201), and adapted to be driven in rotation by means of a set of teeth (18, 59, 218) which they carry at their periphery and with which a tangentially disposed worm (13, 63, 213) is in cooperation, means (20, 60, 220) for driving the worm (13, 63, 213) in rotation being provided and being rendered operational by wear in the friction liners when the clutch is engaged, together with non-return means (36, 78, 98, 236) for preventing the worm (13, 63, 213) from rotating in the opposite direction to that in which it is driven in rotation by the means (20, 60, 220) for driving it in rotation when they are in operation, the worm (13, 63, 213), the non-return means (36, 78, 98, 236) and the means (20, 60, 220) for driving the worm (13, 63, 213) in rotation being carried by a support element (12, 62, 92, 212) which is fixed to the cover plate (2, 52, 202), and the axially acting resilient means (3, 53, 203) consisting of a diaphragm, which controls the rotation of the worm (13, 63, 213) through an interposed control member (35, 76, 101, 121, 235) which is part of the said means (20, 60, 220) for driving the worm (13, 63, 213) in rotation, **characterised by** the fact that the course of travel of the control member (35, 76, 101, 121, 235) during the declutching operation is limited by a so-called control abutment (27 - 28, 71, 117, 274A).

2. A friction clutch according to Claim 1, **characterised by** the fact that the ramp means (11, 54, 211) consist of an annular ring having ramps (15, 56, 215) which are inclined and which are spaced apart circumferentially, and by the fact that the ramp means (11) have an axial flange (16) formed with ventilating apertures (16A).

3. A friction clutch according to Claim 2, **characterised by** the fact that the pressure plate (1, 51, 201) has pads (4, 57, 204) which are adapted to cooperate with the ramps (15, 56, 215) of the ramp means (11, 54, 211), and by the fact that the said annular ring further has abutment zones (14, 214) consisting of the rounded upper edge of press-formed elements disposed in circular arcs centred on the axis of the clutch and located radially outside the ramps (15, 56, 215).

4. A friction clutch according to Claim 1, **characterised by** the fact that the worm (13, 63, 213) is mounted for sliding movement along its axis, being subjected to the action of a so-called take-up elastic means (40, 86, 240, 340, 440, 540), and, when it is displaced along its axis, it drives the said ramp means (11, 54, 211) in circumferential rotation, and by the fact that the resilient take-up means (40; 86, 240) is a helical spring surrounding a spindle (22, 67, 222) which carries the worm (13, 63, 213).

5. A friction clutch according to Claim 4, **characterised by** the fact that the load exerted by the resilient take-up means (40, 86, 240, 340, 440, 540) increases with wear in the friction liners, and the said axial displacement is obtained by action of the resilient take-up means (40, 86, 240, 340, 440, 540) when it exerts a force high enough to overcome the friction force due to the axial force exerted by the resilient return means (9, 209) to which the said ramp means (11, 54, 211) are subjected, the clutch being disengaged.

6. A friction clutch according to Claim 4, **characterised by** the fact that the course of travel of the pressure plate (201) is limited in the declutching direction whereby to release the ramp means (211) from the axial force exerted by the resilient return means (209).

7. A friction clutch according to Claim 4, **characterised by** the fact that the means (20, 60, 220) for driving the worm (13, 63, 213) in rotation consist of a ratchet wheel which is fixed to the worm (13, 63, 213) for rotation therewith.

8. A friction clutch according to Claim 7, **characterised by** the fact that the spindle (22, 67, 222) that carries the worm (13, 63, 213) and helical spring (40, 86, 240) is supported by the support element (12, 62, 92, 212).

9. A friction clutch according to Claim 8, **characterised by** the fact that the clutch is of the push-to-release type, and by the fact that the support element (12) is U-shaped, having a stock portion (19) and two wing portions (23, 24) adapted to support the spindle (22), and the wing portions (23, 24) of the support element (12) are extended by L-shaped arms (27, 28) extending towards each other at right angles to the stock portion (19), with each arm terminating in a C-shaped end portion seamed on the edge of a transverse aperture (6) of the cover plate (2), located in a radial projecting element (5), which defines a housing for the device for taking up clearance.

10. A friction clutch according to Claim 9, **characterised by** the fact that the control member is a control tongue (35), while the non-return means consist of a ratchet (36) which is in cooperation with the ratchet wheel (20), by the fact that the support element (12) is adapted to receive a generally crook-shaped resilient member (31), each end of which is provided with an inwardly directed return portion, while the longer portion (32) of the crook increases in width towards its end that terminates in a return portion (34) which carries at its end a control tongue (35), the shorter portion (33) of the crook having its return portion (36) defining a non-return pawl which extends generally parallel to the control tongue (35), from which it is spaced away, whereby, when the resilient member (31) and the ratchet wheel (20) are mounted in the support element (12), each of the non-return pawl (36) and control tongue (35) is in cooperation with the root of a tooth.

11. A friction clutch according to Claim 10, **characterised by** the fact that, for mounting it in the support element (12), the resilient member (31) carries lateral L-shaped arms (37, 38) disposed on either side of the crook-shaped resilient portion, orthogonally with respect to the latter, and the free ends of the L-shaped arms (37, 38) have holes (39) for the spindle (22).

12. A friction clutch according to Claim 10, **characterised by** the fact that the support element (12), equipped with the worm (13), ratchet wheel (20), resilient member (31), spring (40) and spindle (22), constitutes a sub-assembly ready for installation in the cover plate (2).

13. A friction clutch according to Claim 8, **characterised by** the fact that the diaphragm (3) carries at its periphery a radial appendix referred to as an actuator (45), which extends radially outwards from the Belleville ring portion of the diaphragm (3).

14. A friction clutch according to Claim 11, **characterised by** the fact that the longer portion (32) of the crook of the resilient member (31) comes into abutment against the arms (27, 28) of the support element (12).

15. A friction clutch according to Claim 13, **characterised by** the fact that the support element (62) is U-shaped, having a stock portion (64) and two wing portions (65, 66), each carrying a hole (61) adapted to receive the spindle (67) of the device, the stock portion (64) carrying a lateral L-shaped lug (68) directed outwards and adapted to be fixed on the outer flange of the cover plate (52), while the wing portions (65, 66) of the support element (62) have, on the side opposite to that on which the lug (68) is situated, an axial extension having an end which is bent outwards to constitute a fastening lug (69) parallel to the above mentioned lug (68) and adapted to be fixed to the base of the cover plate (52).

16. A friction clutch according to Claim 15, **characterised by** the fact that the control member is a control tongue (76), and by the fact that the resilient member (72) is in the form of a saddle and comprises a flat elongate body (73) carrying at each of its ends an arm (74) formed with a hole (75) which is adapted to receive the spindle (67), and, on one of its longitudinal edges, the body (73) is extended by an oblique extension (84) on the same side as that on which the arms (74) are located, the extension (84) being limited, with respect to the ends of the body (73) that carry the arms (74), by notches (82, 83) formed in the body (73), the free end of the extension (84) being formed with a return flange (85) which is extended by a control tongue (76) projecting towards the body (73) and generally parallel to the latter.

17. A friction clutch according to Claim 15, **characterised by** the fact that the resilient member consists of two separate pieces, wherein a first piece for the non-return function is a U-shaped stirrup member (93), the two wing portion (94) of which carry holes (95) for supporting the spindle (67), the stock portion (96) of the said stirrup member (93) being pressed out on one of its sides in the vicinity of its middle portion, to define at least two leaves (98A - D), which extend in a direction parallel to that of the wing portions (94) and which are extended by L-shaped return portions directed, on the same side as the wing portions (94) with respect to the stock portion (96), generally at right angles to the said stock portion (96), the said return portions having slightly different lengths, and the leaves (98A-D) constituting a non-return pawl (98) adapted to cooperate with the ratchet wheel (60).

18. A friction clutch according to Claim 17, **characterised by** the fact that the second member, for the control function of the ratchet wheel (63), is a wire spring (107) associated with a finger (101) carried by a cylindrical sleeve (102) force-fitted on a shaft (103), the sleeve (102) and its finger (101) being fixed to the shaft (103), for rotation therewith, by means of a cotter pin (105) extending diametrically through the sleeve (102) and shaft (103), to project on one side of the sleeve (104) so as to define a stop for engagement by the base (104) of an open loop (106) of the wire spring (107), which is configured like a coat hook, the said wire spring (107) being adapted to subject the control finger (101) to a torque which applies the end of the finger (101) on the ratchet wheel (63).

19. A friction clutch according to Claim 18, **characterised by** the fact that the fingers (221) of the ratchet wheel (220) are matched to the outer periphery of the thread of the worm (213).

20. A friction clutch according to Claim 19, **characterised by** the fact that the clutch is of the pull to release type, and by the fact that the support member (212) is generally L-shaped, with two wing portions (223, 224), one of which (223) is arranged to support the spindle (222), the other one (224) being arranged for fastening the support member (212) on the cover plate (202), the wing portion (223) which supports the spindle extending through the diaphragm (203) between two of its fingers.

21. A friction clutch according to Claim 20, **characterised by** the fact that the control member is a control tongue (235), and by the fact that the resilient member (272) is in the general form of a saddle and comprises a flat body (273) carrying at each of its ends an arm (274) formed with a hole (275) adapted to receive the spindle (222), the two arms (274) being parallel to each other and extending on the same side and generally at right angles with respect to the body (273), and, on one of its longitudinal edges, the body (273) is extended by an extension portion (284) which comprises a first portion (284A) in extension of the body (273), a second portion (284B) extending in the direction opposite to that of the arms (274) and making an acute angle with the body (273), a third portion (284C) defining a U with the second portion (284B) and extending parallel to the latter, and a fourth portion (284D) directed towards the body (273) and being parallel to the latter, at a level slightly above, so that it extends between the arms (274), the said fourth portion (284D) either directly or indirectly constituting a control tongue (235).

22. A friction clutch according to Claim 21, **characterised by** the fact that, on its longitudinal edge opposite to that on which the extension (284) is situated, the body (273) carries a non-return pawl (236) consisting of at least two leaves (236A, 236B) of different lengths.

23. A friction clutch according to Claim 1, **characterised by** the fact that the resilient take-up means is outside the worm (213) and is made in the form of a resilient stirrup member (340) straddling the said worm (213).

24. A friction clutch according to Claim 1, **characterised by** the fact that the spindle (222) is inclined with respect to a plane at right angles to the axis of the clutch, by an angle equal to that of the thread of the worm (212).
